(19) Europäisches Patentamt
European Patent Office
Office européen des brevets

(11) EP 2 256 167 B1

(12) # EUROPEAN PATENT SPECIFICATION

(45) Date of publication and mention of the grant of the patent:
**22.08.2018 Bulletin 2018/34**

(21) Application number: **09716642.5**

(22) Date of filing: **03.03.2009**

(51) Int Cl.:
***C08L 77/00*** *(2006.01)* ***C08K 3/00*** *(2018.01)*
***C08K 5/5313*** *(2006.01)* ***C08L 71/12*** *(2006.01)*
***C08L 81/02*** *(2006.01)*

(86) International application number:
**PCT/JP2009/053993**

(87) International publication number:
**WO 2009/110480 (11.09.2009 Gazette 2009/37)**

(54) **FLAME-RETARDANT RESIN COMPOSITION**

FLAMMHEMMENDE HARZZUSAMMENSETZUNG

COMPOSITION DE RÉSINE IGNIFUGEANTE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **03.03.2008 JP 2008052560**

(43) Date of publication of application:
**01.12.2010 Bulletin 2010/48**

(73) Proprietor: **ASAHI KASEI KABUSHIKI KAISHA**
**Tokyo 101-8101 (JP)**

(72) Inventors:
- **FURUKAWA, Hiroaki**
  **Tokyo 101-8101 (JP)**
- **MIYOSHI, Takaaki**
  **Tokyo 101-8101 (JP)**

(74) Representative: **Hubert, Philippe et al**
**Cabinet Beau de Loménie**
**158, rue de l'Université**
**75340 Paris Cedex 07 (FR)**

(56) References cited:
**WO-A1-2004/022640**
**WO-A1-2007/058169**
**JP-A- 62 138 553**
**JP-A- 2004 263 188**
**JP-A- 2005 036 231**
**JP-A- 2006 274 262**
**JP-A- 2006 291 207**
**JP-A- 2007 231 094**
**JP-A- 2008 038 125**
**JP-B- 52 017 880**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 256 167 B1

## Description

### Technical Field

The present invention relates to a flame-retardant resin composition and a heat-resistant connector using the same.

### Background Art

Growing environmental awareness brings about a demand for halogen-free flame retardation as an alternative to the conventional methods using halogen-based compounds and antimony-based compounds, and techniques for flame retardation of thermoplastic resins have been actively developed.

As a flame retardant for halogen-free flame retardation, phosphate ester-based flame retardants, phosphinic acid metal salt-based flame retardants, metal hydroxide-based flame retardants, and the like are put into practical use. Of these, the phosphinic acid metal salt-based flame retardants have recently attracted attention. Patent Document 1, Patent Document 2, and Patent Document 3 each disclose a technique using phosphinic acid metal salts for a thermoplastic resin.

As a technique for improving flame retardance in the above-mentioned techniques, Patent Document 4 and Patent Document 5 each disclose a technique for combining an synergist for a flame retardant containing a nitrogen element represented by melamine (hereinafter, referred to as a "nitrogen containing synergist") and melamine polyphosphate with a phosphinic acid metal salt (Patent Document 4 and Patent Document 5).

As a technique for suppressing degradation and discoloration of a polymer at the time of processing, Patent Document 6 discloses a technique for using a flame retardant of a phosphinic acid metal salt and a nitrogen containing synergist, and using a basic or amphoteric metallic compound in a relatively high concentration of from 20 to 50% by mass based on the flame retardant of a phosphinic acid metal salt.

On the other hand, a demand for higher heat resistance, lower water absorption properties, higher mechanical physical properties, and higher workability of a thermoplastic resin has been increasing in recent years.

A heat-resistant resin composition comprising an aromatic polyamide, polyphenylene ether, a compatibilizing agent for the polyamide and the polyphenylene ether, and a crystal nucleating agent such as talc, has been disclosed (EP 1 950 248).

WO 2004/022640 has taught that the use of oxides in flame-retardant compositions for thermoplastics containing a mixture of phosphonates and melamine polyphosphate, reduce the discoloration of the plastics in the course of processing in the melt, and suppress the decomposition of the plastics.

Patent Document 1: German Patent Application Publication No. 2,252,258
Patent Document 2: German Patent Application Publication No. 2,447,727
Patent Document 3: European Patent Application Publication No. 0,699,708
Patent Document 4: German Patent Application Publication No. 19614424
Patent Document 5: German Patent Application Publication No. 19933901
Patent Document 6: Japanese Unexamined Patent Application Publication No. 2005-537372

### Disclosure of the Invention

### Problems to be Solved by the Invention

However, in the above-mentioned polymer having high heat resistance, the temperature during processing often exceeds 320°C. Use of the flame retardant of a phosphinic acid metal salt together with the nitrogen containing synergist as shown in the above-mentioned Patent Document 6 shows higher corrosiveness than in the case of use of the flame retardant of a phosphinic acid metal salt alone. On the other hand, in the case where the nitrogen containing synergizing agent is not used, it is difficult to keep flame retardance by using a basic or amphoteric metal compound on the condition of a high concentration of from 20 to 50% by mass based on the flame retardant of a phosphinic acid metal salt.

The present invention has been made in consideration of the above-mentioned circumstances. An object of the present invention is to provide a flame-retardant resin composition and a heat-resistant connector using the flame-retardant resin composition having excellent heat resistance, flame retardance, extrusion processability, and injection molding stability, and further having reduced corrosiveness to a metal.

Means for Solving the Problems

As a result of repeating examination in order to solve the above-mentioned problems, the present inventors have found that the problems described above can be solved by blending a specific amount of a basic compound having a specified number average particle size based on a specific phosphinate salt in a combination of a thermoplastic resin and the specific phosphinate salt. In consequence, the present invention has been completed.

Namely, the present invention is as follows.

1. A flame-retardant resin composition, comprising:

(A) a thermoplastic resin;
(B) at least one phosphinate salt selected from phosphinate salts represented by the following general formula (I), diphosphinate salts represented by the following general formula (II), and condensates thereof; and
(C) a basic compound,
wherein the flame-retardant resin composition comprises from 0.01 to 10 parts by mass of the (C) component based on 100 parts by mass of the (B) component:

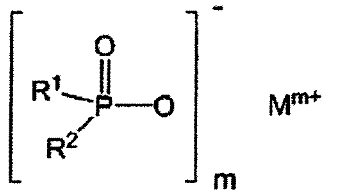

(I)

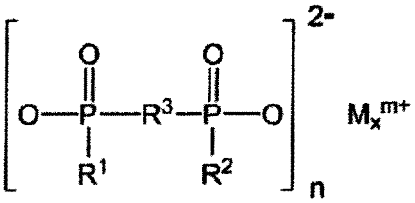

(II)

wherein $R^1$ and $R^2$ may be the same or different from each other, and represent linear or branched $C_1$ to $C_6$-alkyl and/or aryl or phenyl; $R^3$ represents linear or branched $C_1$ to $C_{10}$-alkylene, $C_6$ to $C_{10}$-arylene, $C_6$ to $C_{10}$-alkylarylene or $C_6$ to $C_{10}$-arylalkylene; M represents one or more selected from calcium (ion), magnesium (ion), aluminum (ion), zinc (ion), bismuth (ion), manganese (ion), sodium (ion), potassium (ion), and a protonated nitrogen base; m is 2 or 3, n is an integer of from 1 to 3, and x is 1 or 2.

2. The flame-retardant resin composition according to the above-mentioned 1., wherein (C) the basic compound has a number average particle size of from 100 nm to 25 μm, and is one or more selected from hydroxides and oxides of one or more elements selected from the IIA group elements in the periodic table and aluminum.
3. The flame-retardant resin composition according to the above-mentioned 1., wherein (C) the basic compound is one or more selected from hydroxides and oxides of one or more selected from calcium, magnesium, and aluminum.
4. The flame-retardant resin composition according to the above-mentioned 1., wherein (C) the basic compound is calcium hydroxide and/or calcium oxide having a number average particle size of from 100 nm to 25 μm.
5. The flame-retardant resin composition according to the above-mentioned 1., wherein (C) the basic compound is calcium hydroxide having a number average particle size of from 100 nm to 10 μm.
6. The flame-retardant resin composition according to the above-mentioned 5., wherein the calcium hydroxide is calcium hydroxide having a number average particle size of from 100 nm to 5000 nm.
7. The flame-retardant resin composition according to the above-mentioned 1., wherein the flame-retardant resin composition contains from 0.2 to 5 parts by mass of the (C) component based on 100 parts by mass of the (B) components.
8. The flame-retardant resin composition according to the above-mentioned 1., wherein (A) the thermoplastic resin is one or more selected from polyphenylene ethers, styrene-based resins, olefin-based resins, polyesters (polybutylene terephthalate, polypropylene terephthalate, and liquid crystal polyesters), polyamides, polyarylene sulfides, polyarylates, polyethersulfones, polyetherimides, polysulfones, polyaryl ketones, and a mixture thereof.
9. The flame-retardant resin composition according to the above-mentioned 8., wherein (A) the thermoplastic resin

is polyamide having a melting point of 280°C or more.

10. The flame-retardant resin composition according to the above-mentioned 8., wherein (A) the thermoplastic resin is polyamide having an aromatic ring in a repeating structural unit.

11. The flame-retardant resin composition according to the above-mentioned 8., wherein the polyphenylene ether is a homopolymer made of 2,6-dimethylphenol, or a copolymer made of 2,6-dimethylphenol and 2,3,6-trimethylphenol.

12. The flame-retardant resin composition according to the above-mentioned 8., wherein the polyphenylene ether is a copolymer made of 2,6-dimethylphenol and 2,3,6-trimethylphenol, and an amount of 2,3,6-trimethylphenol in the polyphenylene ether is from 10 to 30% by mass.

13. The flame-retardant resin composition according to the above-mentioned 8., wherein the polyphenylene ether is polyphenylene ether whose reduced viscosity (0.5 g/dL chloroform solution, 30°C) is within a range of from 0.25 dL/g to 0.35 dL/g.

14. The flame-retardant resin composition according to the above-mentioned 8., wherein the polyarylene sulfide is polyphenylene sulfide in which a concentration of chlorine contained is 1500 ppm or less.

15. The flame-retardant resin composition according to the above-mentioned 8., wherein (A) the thermoplastic resin comprises polyphenylene ether and a thermoplastic resin other than polyphenylene ether.

16. The flame-retardant resin composition according to the above-mentioned 15., wherein the thermoplastic resin other than polyphenylene ether is polyamide.

17. The flame-retardant resin composition according to the above-mentioned 16., wherein a melting point of the polyamide is 280°C or more.

18. The flame-retardant resin composition according to the above-mentioned 1., further comprising (D) an inorganic reinforcing material.

19. A heat-resistant connector comprising a flame-retardant resin composition according to any one of the above-mentioned 1. to 18.

Advantages of the Invention

According to the present invention, a flame-retardant resin composition having excellent heat resistance, flame retardance, extrusion processability, and injection molding stability and further having reduced corrosiveness to a metal, and a heat-resistant connector using the flame-retardant resin composition can be provided.

Best Mode for Carrying Out the Invention

Hereinafter, embodiments for carrying out the present invention (hereinafter, simply referred to as a "present embodiment") will be described in detail. The present embodiment below is exemplification for describing the present invention, and is not intended to limit the present invention to the contents given below. Within the scope of the gist, the present invention can be properly modified and implemented.

An (A) thermoplastic resin of the present embodiment is not particularly limited, and known thermoplastic resins can be used. Of those, preferable examples of the thermoplastic resin may include at least one selected from polyphenylene ethers, styrene-based resins, olefin-based resins, polyesters (polybutylene terephthalate, polypropylene terephthalate, and liquid crystal polyesters), polyamides, polyarylene sulfides, polyarylates, polyethersulfones, polyetherimides, polysulfones, polyaryl ketones, and a mixture thereof.

Of these, more preferable are single use of polyphenylene ether, polyester, or polyamide; and a mixture of (i) one or more of resins selected from polyphenylene ethers, polyesters, and polyamides, and (ii) one or more of resins selected from homopolystyrenes, rubber modified polystyrenes, and styrene-based elastomers, acrylonitrile-styrene copolymers, copolymers of N-phenylmaleimide and styrene, polypropylenes, olefin-based elastomers, liquid crystal polyesters, polyamides, polyphenylene sulfides, polyetherimides, polyethersulfones, polysulfones, and polyaryl ketones.

Polyphenylene ethers usable for the present embodiment are a homopolymer and/or a copolymer having a repeating structural unit represented by the following formula (1),

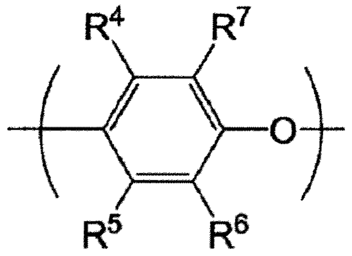

(1)

wherein O represents an oxygen atom, $R^4$ to $R^7$ each independently represent hydrogen, halogen, a primary or secondary C1 to C7 alkyl group, a phenyl group, a C1 to C7 haloalkyl group, a C1 to C7 amino alkyl group, a C1 to C7 hydrocarbyloxy group, or a halo hydrocarbyloxy group (however, an halogen atom and an oxygen atom are separated by at least two carbon atoms.)

A method for producing polyphenylene ether used in the present embodiment is not particularly limited, and a known method can be used. Examples thereof may include methods for production described in U.S. Patent Nos. 3306874, 3306875, 3257357, and 3257358, Japanese Patent Laid-Open No. 50-51197, Japanese Patent Publication Nos. 52-17880, and 63-152628.

Specific examples of polyphenylene ethers according to the present embodiment may include homopolymers such as poly(2,6-dimethyl phenylene ether), poly(2-methyl-6-ethyl-1,4-phenylene ether), poly(2-methyl-6-phenyl-1,4-phenylene ether) and poly(2,6-dichloro-1,4-phenylene ether), and polyphenylene ether copolymers such as copolymers of 2,6-dimethylphenol and other phenols (for example, a copolymer with 2,3,6-trimethylphenol and a copolymer with 2-methyl-6-butylphenol). Of these, poly(2,6-dimethyl phenylene ether), copolymers of 2,6-dimethylphenol and 2,3,6-trimethylphenol, or a mixture thereof are preferable from the viewpoint of industrial productivity and heat-resistant performance.

Moreover, from the viewpoint of heat resistance and processability, as a proportion of each monomer unit in the case of using the copolymer of 2,6-dimethylphenol and 2,3,6-trimethylphenol, from 10 to 30% by mass of 2,3,6-trimethylphenol is preferably contained based on 100% by mass of the whole polyphenylene ether copolymer. The amount of 2,3,6-trimethylphenol is more preferably from 15 to 25% by mass, and is still more preferably from 20 to 25% by mass.

In the present embodiment, the reduced viscosity of polyphenylene ether ($\eta$sp/c:dL/g, chloroform solution having a concentration of 0.5 g/dL, measured at 30°C) is preferably from 0.20 to 0.55 dL/g. A more preferable upper limit is 0.53 dL/g, still more preferably 0.45 dL/g, and further still more preferably 0.35 dL/g. From the viewpoint of processability, the upper limit of the reduced viscosity thereof is preferably 0.55 dL/g. From the viewpoint of no reduction in mechanical properties when polyphenylene ether is alloyed with other resin, the lower limit of the reduced viscosity thereof is preferably 0.25 dL/g.

In the present embodiment, a mixture obtained by blending two or more of polyphenylene ethers having a different reduced viscosity can also be used. Examples of the mixture may include, but not limited to, a mixture of polyphenylene ether having a reduced viscosity of approximately 0.40 dL/g and polyphenylene ether having a reduced viscosity of approximately 0.50 dL/g, and a mixture of low molecular weight polyphenylene ether having a reduced viscosity of approximately 0.08 to 0.12 dL/g and polyphenylene ether having a reduced viscosity of approximately 0.50 dL/g. Also in this case, and the reduced viscosity of the mixture of polyphenylene ethers is preferably from 0.20 to 0.55 dL/g.

The above-mentioned polyphenylene ether may be denatured with a denaturing agent. Examples of the denaturing agent may include saturated or unsaturated dicarboxylic acids such as maleic acid anhydride, N-phenylmaleimide, malic acid, citric acid, and fumaric acid, derivatives thereof, and vinyl compounds such as styrene, acrylic acid esters, and methacrylic acid esters. In this case, the polyphenylene ether may be denatured in advance, or the denaturing agent can be added to denature the polyphenylene ether simultaneously when the flame-retardant resin composition according to the present embodiment is produced by melting extrusion.

Other known additive that can be added to polyphenylene ether may be added by an amount of less than 10 parts by mass based on 100 parts by mass of polyphenylene ether.

Examples of the styrene-based resins usable for the present embodiment may include homopolystyrenes, rubber modified polystyrenes (usually referred to as high impact polystyrenes), styrene-based elastomers (styrenebutadiene block copolymers and/or hydrogenated products thereof, styrene-isoprene block copolymer and/or hydrogenated products thereof), and copolymers of vinyl monomers allowing radical copolymerization with styrene.

Examples of the vinyl monomers allowing radical copolymerization with styrene may include vinyl cyanide compounds such as acrylonitrile and methacrylonitrile; vinyl carboxylic acids such as acrylic acid, butyl acrylate, methacrylic acid, methyl methacrylate, and methacrylic acid ethylhexyl, and esters thereof; unsaturated dicarboxylic acid anhydrides such as maleic acid anhydride and N-phenylmaleimide, and derivatives thereof; and diene compounds such

as butadiene and isoprene. Two or more thereof can also be copolymerized in combination.

Of those mentioned above, preferable examples of the styrene-based resin may include homopolystyrenes, rubber modified polystyrenes, styrene-based elastomers, acrylonitrile styrene copolymers, copolymers of N-phenylmaleimide and styrene, and a mixture thereof.

A preferable reduced viscosity at the time of using the homopolystyrene and rubber modified polystyrene (measured in a concentration of 0.5 g/100 mL in a 30°C toluene solution) is preferably from 0.5 to 2.0 dL/g. A more preferable lower limit thereof is 0.7 dL/g, and is still more preferably 0.8 dL/g. Moreover, a more preferable upper limit is 1.5 dL/g, and is still more preferably 1.2 dL/g.

The styrene-based elastomer is a block copolymer containing a polymer block mainly containing at least one aromatic vinyl compound and at least one polymer block selected from (i) a polymer block mainly containing a conjugated diene compound and (ii) a random copolymer block made of a conjugated diene compound and an aromatic vinyl compound.

"Mainly containing" in the polymer block mainly containing an aromatic vinyl compound means that at least 90% by mass or more of the block is an aromatic vinyl compound. Similarly, "mainly containing" in the polymer block mainly containing a conjugated diene compound means that at least 97% by mass or more of the block is a conjugated diene compound. Further, the random copolymer block made of a conjugated diene compound and an aromatic vinyl compound refers to a block in which from 3 to 90% by mass of the aromatic vinyl compound and from 97 to 10% by mass of the conjugated diene compound are random copolymerized. Then, in the block copolymer, the vinyl aromatic compound in the random copolymerization portion may be distributed uniformly, or may be distributed in a tapered manner. In the copolymer block, a plurality of portions in which the vinyl aromatic compound is distributed uniformly and/or a plurality of portions in which the vinyl aromatic compound is distributed in a tapered manner may coexist.

Further, in the copolymer block, a plurality of portions having a different content of the vinyl aromatic compound may coexist. In this case, for example, even if the aromatic vinyl compound block is a block in which a small amount of a conjugated diene compound or other compound is bonded at random in the aromatic vinyl compound block, the block copolymer containing the above-mentioned block is regarded as the block copolymer mainly containing the aromatic vinyl compound as long as 90% by mass of the block is formed of the aromatic vinyl compound. Moreover, in the case of the conjugated diene compound, the block copolymer is regarded as the block copolymer mainly containing conjugated diene as long as 97% by mass of the block is formed of the conjugated diene compound.

Examples of the block copolymer made of polymer block A mainly containing the vinyl aromatic compound and polymer block B mainly containing (i) the conjugated diene compound may include a block copolymer having one of structures represented by the following general formula (2):

$$(A-B)_x,$$

$$A-(B-A)_x-B,$$

$$B-(A-B)_{(x+1)},$$

$$[(A-B)_z]_{(y+1)}-Z, \quad \ldots(2)$$

$$[(A-B)_z-A]_{(y+1)}-Z,$$

$$[(B-A)_z]_{(y+1)}-Z,$$

$$[(B-A)_z-B]_{(y+1)}-Z,$$

wherein Z represents a residual group of a coupling agent or a residual group of an initiator of a polyfunctional organolithium compound; x, y, and z each are an integer of 1 or more, and generally from 1 to 5.

Of these, as a preferable bonding form of the block copolymer, a block copolymer having a bonding form selected from the A-B type, the A-B-A type, and the A-B-A-B type is preferable. The A-B-A type and the A-B-A-B type are more preferable, and the A-B-A type is still more preferable. These may be a mixture.

Further examples of the block copolymers may include those formed of polymer block A mainly containing a vinyl aromatic compound and at least one or more polymer blocks selected from polymer block B mainly containing (i) a conjugated diene compound and (ii) random copolymer block C obtained by copolymerizing a vinyl aromatic compound and a conjugated diene compound at random. Examples of such a polymer block may include block copolymers having one of structures represented by the following general formula (3):

$$A\text{-}B\text{-}(C\text{-}A)_x,$$

$$A\text{-}B\text{-}(A\text{-}C)_x,$$

$$A\text{-}B\text{-}(C\text{-}A)_x\text{-}C,$$

$$[(A\text{-}C\text{-}B)_x]_y\text{-}W,$$

$$B\text{-}(C\text{-}A)_x,$$

$$B\text{-}(A\text{-}C)_x,$$

$$B\text{-}(A\text{-}C\text{-}A)_x,$$

$$B\text{-}(C\text{-}A\text{-}C)_x, \quad \ldots(3)$$

$$[A\text{-}(C\text{-}B)_x]_y\text{-}W,$$

$$[(A\text{-}C)_x\text{-}B]_y\text{-}W,$$

$$[(A\text{-}C\text{-}A)_x\text{-}B]_y\text{-}W,$$

$$[(C\text{-}A\text{-}C)_x\text{-}B]_y\text{-}W,$$

$$[(B\text{-}C\text{-}A)_x]_y\text{-}W,$$

$$[B\text{-}(C\text{-}A)_x]_y\text{-}W,$$

$$[B\text{-}(A\text{-}C\text{-}A)_x]_y\text{-}W,$$

$$[B\text{-}(C\text{-}A\text{-}C)_x]_y\text{-}W,$$

$$(A\text{-}C)_{(x+1)},$$

$$A\text{-}(C\text{-}A)_x,$$

$$C\text{-}(A\text{-}C)_{(x+1)},$$

$$[(A\text{-}C)_x]_y\text{-}W,$$

$$[(C\text{-}A)_x\text{-}C]_y\text{-}W,$$

$$[(A\text{-}C)_x\text{-}A]_y\text{-}W,$$

$$[(C\text{-}A)_{(x+1)}]_y\text{-}W$$

wherein x and y are the same as defined in the formula (2); W each independently represents a residual group of a coupling agent or a residual group of a polyfunctional initiator.

As the coupling agent, coupling agents not less than bifunctional mentioned later can be used. As the polyfunctional initiator, a reaction product of diisopropenylbenzene with sec-butyl lithium, a reaction product of divinylbenzene and sec-butyl lithium with a small amount of 1,3-butadiene, and the like can be used.

The boundary between the respective blocks mentioned above does not always need to be distinguished clearly. The vinyl aromatic compound used for the vinyl aromatic compound-conjugated diene compound block copolymer is not particularly limited. For example, one or two or more can be selected from styrene, α-methylstyrene, vinyltoluene, p-tert-butyl styrene, diphenylethylene, and the like. Of those, in the case where a vinyl aromatic compound is mixed with polyphenylene ether and used, styrene is preferable from the viewpoint of compatibility with polyphenylene ether and industrial productivity.

The content of the vinyl aromatic compound in the block copolymer containing the polymer block mainly containing at least one aromatic vinyl compound and at least one polymer block selected from (i) the polymer block mainly containing a conjugated diene compound and (ii) a random copolymer block made of the conjugated diene compound and the aromatic vinyl compound is not particularly limited, and can be selected suitably in the range of from 1 to 70% by mass. In the case where the styrene-based elastomer is mixed with polyphenylene ether and used, the content of the vinyl aromatic compound thereof is more preferably from 5 to 55% by mass from the viewpoint of heat resistance, and is still more preferably from 10 to 55% by mass.

Examples of the conjugated diene compound in the block copolymer may include, but not particularly limited to, one or two or more from butadiene, isoprene, 1,3-pentadiene, 2,3-dimethyl-1,3-butadiene. Of those, butadiene, isoprene, and a combination thereof are preferable from the viewpoint of impact resistance.

The block copolymer that can be used for the present embodiment is more preferably a block copolymer hydrogenated. The hydrogenated block copolymer refers to those in which the above-mentioned block copolymer of the aromatic vinyl compound and the conjugated diene compound is hydrogenated so that the amount (hydrogenation proportion) of aliphatic double bonds of the polymer block mainly containing the conjugated diene compound is in the range of more than 0 and 100% or less. A preferable hydrogenation proportion of the hydrogenated block copolymer is 50% or more, more preferably 80% or more, and still more preferably 98% or more.

The hydrogenation proportion can be measured with a nuclear magnetic resonance apparatus.

As a specific example of the hydrogenation method, a catalyst for hydrogenation and hydrogen gas are added into a hydrocarbon solvent to perform a hydrogenation reaction. Thereby, olefin unsaturated bonds derived from the conjugated diene compound existing in the polymer are reduced so that the hydrogenated block copolymer can be obtained. The method for the hydrogenation reaction is not limited, and may be any production method as long as olefin unsaturated bonds derived from the conjugated diene compound existing in the block copolymer can be reduced.

A vinyl aromatic compound-conjugated diene compound block copolymer having a functional group and obtained by reacting the above-mentioned block copolymer with an unsaturated compound having a functional group (for example, a carboxylic acid group, an acid anhydride group, an ester group, a hydroxyl group, and the like), or a hydrogenated block copolymer that is a hydrogenated product thereof and has a functional group can also be used.

In the present embodiment, a mixture of a block copolymer not hydrogenated and a block copolymer hydrogenated can also be used as the block copolymer.

In the present embodiment, an entirely or partially denatured block copolymer and a block copolymer with which an oil is mixed in advance, as described in WO 02/094936, can also be used suitably.

Examples of a copolymer suitable as an acrylonitrile-styrene copolymer may include copolymers in which the content of acrylonitrile is from 3 to 30% by mass based on the 100% by mass of the acrylonitrile-styrene copolymer. The lower limit of the content of acrylonitrile is more preferably 5% by mass, and still more preferably 7% by mass or more. Moreover, the upper limit of the content of acrylic nitrile is preferably 20% by mass, more preferably 15% by mass, and still more preferably 10% by mass. In the present embodiment, up to 30 parts by mass of butadiene may be contained based on 100 parts by mass of the total amount of the acrylonitrile-styrene copolymer.

Examples of a copolymer suitable as a copolymer of N-phenylmaleimide and styrene may include copolymers in which the content of N-phenylmaleimide is from 15 to 70% by mass based on 100% by mass of the copolymer of N-phenylmaleimide and styrene. The lower limit of the amount of N-phenylmaleimide is more preferably 20% by mass, and still more preferably 25% by mass. Moreover, the upper limit of the content of N-phenylmaleimide is more preferably 65% by mass, and still more preferably 60% by mass. In the present embodiment, up to 30 parts by mass of acrylonitrile component may be contained based on 100 parts by mass of the total amount of the copolymer of N-phenylmaleimide and styrene. The glass transition temperature of the copolymer of N-phenylmaleimide and styrene is preferably within the range of from 140 to 220°C. The glass transition temperature is a glass transition temperature that can be observed when measurement is performed at a heating rate of 20°C/min. using a DSC measurement apparatus.

The olefin-based resins usable for the present embodiment will be described. Examples of the olefin-based resin may include, but not limited to, polyethylenes, polypropylenes, olefin-based elastomers (copolymers of ethylene and $\alpha$-olefin), copolymers of ethylene and acrylates. Of these, polypropylenes (hereinafter, abbreviated as "PPs.") and olefin-based elastomers are preferable.

Examples of the PPs usable for the present embodiment may include (i) crystalline propylene homopolymers, and (ii) crystalline propylene-ethylene block copolymers having crystalline propylene homopolymer parts obtained at a first step of polymerization and propylene-ethylene random copolymer parts obtained by copolymerizing propylene, ethylene, and/or at least one other $\alpha$-olefin (for example, butene-1, hexene-1, and the like) after a second step of polymerization. Further examples thereof may include mixtures of these crystalline propylene homopolymers and crystalline propylene-ethylene block copolymers.

These PPs are usually obtained by polymerizing at a polymerization temperature of from 0 to 100°C and a polymerization pressure of from 3 to 100 atmospheres in the presence of a titanium trichloride catalyst, a halogenated titanium catalyst carried on a support such as magnesium chloride, or the like and an alkylaluminum compound. In this

case, a chain transfer agent such as hydrogen can also be added in order to adjust the molecular weight of the polymer. The polymerization method may be one of a batch process and a continuous process. Methods such as solution polymerization in the presence of a solvent such as butane, pentane, hexane, heptane, and octane, and slurry polymerization can also be selected. Furthermore, bulk polymerization in a monomer in the absence of a solvent, a vapor phase polymerization method in a gaseous monomer, and the like can be used.

Other than the above-mentioned polymerization catalyst, electron donative compounds can be used as an internal donor component or an external donor component as a third component in order to enhance isotacticity and polymerization activity of the PP obtained. Known electron donative compounds can be used for these electron donative compounds. Examples thereof may include ester compounds such as ε-caprolactone, methyl methacrylate, ethyl benzoate, and toluic-acid methyl; phosphorous acid esters such as phosphorous acid triphenyl and phosphorous acid tributyl; phosphoric acid derivatives such as hexamethylphosphoric triamide; alkoxy ester compounds; aromatic monocarboxylic acid esters and/or aromatic alkyl alkoxysilanes; aliphatic hydrocarbon alkoxysilanes; various ether compounds; various alcohols; and/or various phenols.

The density of a propylene polymer part in the PP is usually 0.900 g/$cm^3$ or more, preferably from 0.90 to 0.93 g/$cm^3$, and more preferably from 0.90 to 0.92 g/$cm^3$. As a method for measuring the density of the propylene polymer part, the density thereof can be easily measured by underwater substitution method according to JIS K-7122. Moreover, in the case where the PP is a copolymer of α-olefin mainly containing propylene, the copolymerization component is extracted from the copolymer using a solvent such as hexane, and the density of the remaining propylene polymer part can be easily measured by the above-mentioned underwater substitution method according to JIS K-7112.

In the present embodiment, a known crystalline nucleating agent is preferably added to increase the density of the PP. The crystalline nucleating agent is not particularly limited as long as the crystalline nucleating agent improves crystallinity of the PP. Examples thereof may include organic nucleating agents such as metal salts of aromatic carboxylic acids, sorbitol-based derivatives, organic phosphate, and aromatic amide compounds, and inorganic nucleating agents such as talc. However, the crystalline nucleating agent is not limited to these.

In the PP used for the present embodiment, the melt flow rate thereof (MFR; JIS K-6758, measured at a temperature of 230°C and load of 2.16 kgf.) is preferably 10 g/10 minutes or more, preferably from 20 to 50 g/10 minutes, more preferably from 25 to 40 g/10 minutes, and still more preferably from 30 to 40 g/10 minutes.

The ethylene/α-olefin copolymers will be described. The ethylene/α-olefin copolymers usable for the present embodiment are copolymers of at least one or more of ethylene and α-olefin having 3 to 20 carbon atoms. Examples of the α-olefin having 3 to 20 carbon atoms specifically may include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene, and a combination thereof. Of these, copolymers using α-olefins having 3 to 12 carbon atoms are preferable. In the ethylene/α-olefin-based copolymers, the content of α-olefin is preferably from 1 to 30 mol %, more preferably from 2 to 25 mol %, and still more preferably from 3 to 20 mol %.

Further, at least one of nonconjugated dienes such as 1,4-hexadiene, dicyclopentadiene, 2,5-norbornadiene, 5-ethylidene norbornene, 5-ethyl-2,5-norbornadiene, and 5-(1'-propenyl)-2-norbornene, may be copolymerized.

The ethylene/α-olefin copolymers are copolymers having a structure shown above. Generally, the followings can also be used: ethylene/α-olefin copolymers having a functional group, which are obtained by further reacting these ethylene/α-olefin copolymers with an unsaturated compound having a functional group (for example, a carboxylic acid group, an acid anhydride group, an ester group, a hydroxyl group, and the like); copolymers of ethylene and monomers containing a functional group (for example, an epoxy group, a carboxylic acid group, an acid anhydride group, an ester group, a hydroxyl group, and the like); copolymers of ethylene/α-olefin/functional group containing monomers, and the like.

Examples of polyesters usable for the present embodiment may include polybutylene terephthalate, polypropylene terephthalate, polyethylene terephthalate, polyethylene naphthalate, polybutylene naphthalate, polypropylene naphthalate, and liquid crystal polyesters. These may be a mixture. Of these, liquid crystal polyesters are preferable.

The liquid crystal polyesters preferable and usable for the present embodiment are polyesters called thermotropic liquid crystal polymers, and known liquid crystal polyesters can be used. Examples thereof may include thermotropic liquid crystal polyesters containing p-hydroxybenzoic acid and polyethylene terephthalate as main component units; thermotropic liquid crystal polyesters containing p-hydroxybenzoic acid and 2-hydroxy-6-naphthoic acid as main component units; and thermotropic liquid crystal polyesters containing p-hydroxybenzoic acid, 4,4'-dihydroxy biphenyl, and terephthalic acid as main component units, and are not particularly limited. As the liquid crystal polyesters used for the present embodiment, those including the following structural units (a) and (b), and, if necessary, (c) and/or (d) are preferably used.

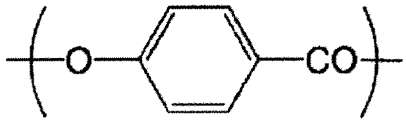

(a)

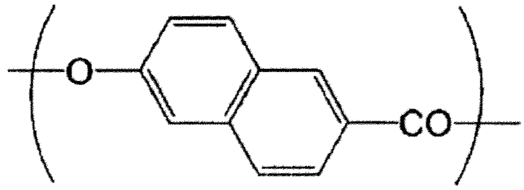

(b)

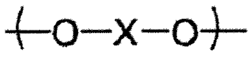

(c)

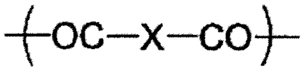

(d)

Here, the structural units (a) and (b) are a structural unit of polyester produced from p-hydroxybenzoic acid, and a structural unit produced from 2-hydroxy-6-naphthoic acid, respectively. By use of the structural units (a) and (b), the thermoplastic resin composition according to the present embodiment having high heat resistance and good balance of mechanical properties such as fluidity and rigidity can be obtained. For X in each of the above-mentioned structural units (c) and (d), one or two or more can be arbitrarily selected from the following formula:

X: 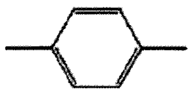 , 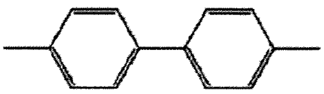 , 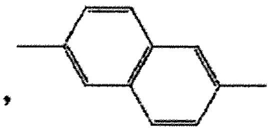

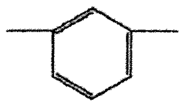 , 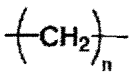

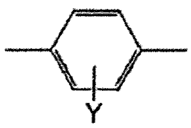

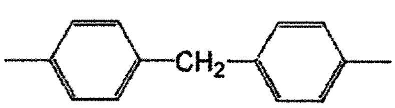 , 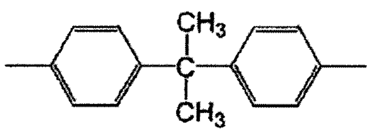

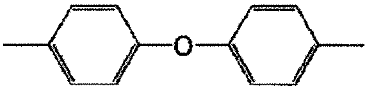 , 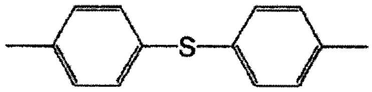

wherein Y represents a halogen atom, an alkyl group, or an aryl group, and n is an integer of from 1 to 6.

In the structural formula (c), structural units of ethylene glycol, hydroquinone, 4,4'-dihydroxy biphenyl, 2,6-dihydroxy naphthalene, and bisphenol A are preferable. Structural units of ethylene glycol, 4,4'-dihydroxy biphenyl, and hydroquinone are more preferable. Structural units of ethylene glycol and 4,4'-dihydroxy biphenyl are still more preferable.

In the structural formula (d), structural units of terephthalic acid, isophthalic acid, and 2,6-naphthalene dicarboxylic acid are preferable. Structural units of 2,6-naphthalene dicarboxylic acid and terephthalic acid are more preferable.

In the structural formula (c) and the structural formula (d), at least one of the structural units mentioned above can be used, or two or more thereof can be used in combination. Specifically, in the case where two or more thereof are used in combination, examples of the structural units in the structural formula (c) may include (1) a structural unit produced from ethylene glycol/a structural unit produced from hydroquinone, (2) a structural unit produced from ethylene glycol/a structural unit produced from 4,4'-dihydroxy biphenyl, and (3) a structural unit produced from hydroquinone/a structural unit produced from 4,4'-dihydroxy biphenyl.

Moreover, examples of the structural units in the structural formula (d) may include (1) a structural unit of terephthalic acid/a structural unit of isophthalic acid, and (2) a structural unit of terephthalic acid/a structural unit of 2,6-naphthalene dicarboxylic acid.

The proportion of the structural units (a), (b), (c), and (d) used in the liquid crystal polyester is not particularly limited. However, basically, the structural units (c) and (d) have approximately an equimolecular amount.

The following structural unit (e) formed of the structural units (c) and (d) can also be used as a structural unit in the liquid crystal polyester. Specifically, examples thereof may include (1) a structural unit formed of ethylene glycol and terephthalic acid, (2) a structural unit formed of hydroquinone and terephthalic acid, (3) a structural unit formed of 4,4'-dihydroxy biphenyl and terephthalic acid, (4) a structural unit formed of 4,4'-dihydroxy biphenyl and isophthalic acid, (5) a structural unit formed of bisphenol A and terephthalic acid, and (6) a structural unit formed of hydroquinone and 2,6-naphthalene dicarboxylic acid:

$$\left( O-X-OCO-X-CO \right) \qquad (e)$$

wherein X is the same as defined in the structural units (c) and (d).

A structural unit produced from other aromatic dicarboxylic acids, aromatic diol, and aromatic hydroxycarboxylic acids can be introduced into the liquid crystal polyester of the present embodiment, when necessary, by a small amount thereof in a range such that the structural unit does not impair characteristics and effects of the present embodiment. A temperature at which a liquid crystal state begins to show at the time of melting of the liquid crystal polyester of the present embodiment (hereinafter, referred to as a liquid crystal starting temperature) is preferably from 150 to 350°C, and more preferably from 180 to 320°C. At a liquid crystal starting temperature in this range, the flame-retardant resin composition obtained can be well-balanced with respect to preferable color tone, heat resistance, and molding workability.

The dielectric loss factor (tanδ) of the liquid crystal polyester of the present embodiment at 25°C and 1 MHz is preferably 0.03 or less, and more preferably 0.025 or less. Dielectric loss is smaller as the value of this dielectric loss factor is smaller. Upon using this flame-retardant resin composition as a raw material for electrical and electronic components, it is preferable because electrical noises to be produced are suppressed. Particularly at 25°C and in a high frequency range, i.e., the region of from 1 to 10 GHz, the dielectric loss factor (tanδ) is preferably 0.03 or less, and more preferably 0.025 or less.

The apparent melt viscosity of the liquid crystal polyester of the present embodiment (a shear rate of 100/seconds at a liquid crystal starting temperature of +30°C) is preferably from 10 to 3,000 Pa·s, more preferably from 10 to 2,000 Pa·s, and still more preferably from 10 to 1,000 Pa·s. An apparent melt viscosity within this range provides preferable fluidity of the composition obtained.

Next, polyamides will be described.

Polyamides usable for the present embodiment are not particularly limited, and may be any of those that have an amide bond {-NH-C(=O)-} in the repeating structure of the polymer.

Polyamides are usually obtained by a method such as ring opening polymerization of lactams, polycondensation of diamines and dicarboxylic acid, and polycondensation of aminocarboxylic acid. However, in the present embodiment, the method is not limited to these.

Specific examples of the lactams may include ε-caprolactam, enantolactam, and ω-laurolactam.

Examples of the diamines may include aliphatic, alicyclic, and aromatic diamines. Specific examples thereof may include tetramethylenediamine, hexamethylenediamine, undecamethylenediamine, dodecamethylenediamine, tridecamethylenediamine, 2-methyl-1,5-pentanediamine, 1,9-nonanediamine, 2-methyl-1,8-octanediamine, 2,2,4-trimethylhexamethylenediamine, 2,4,4-trimethylhexamethylenediamine, 5-methylnonamethylenediamine, 1,3-bisaminomethylcyclohexane, 1,4-bisaminomethylcyclohexane, m-phenylenediamine, p-phenylenediamine, m-xylylenediamine, and p-xylylenediamine.

Examples of the dicarboxylic acids may include aliphatic, alicyclic, and aromatic dicarboxylic acids. Specific examples thereof may include adipic acid, suberic acid, azelaic acid, sebacic acid, dodecanedioic acid, 1,1,3-tridecanedioic acid, 1,3-cyclohexanedicarboxylic acid, 1,4-cyclohexanedicarboxylic acid, terephthalic acid, isophthalic acid, naphthalene dicarboxylic acid, and dimer acid.

Specific examples of the aminocarboxylic acids may include ε-aminocaproic acid, 7-aminoheptanoic acid, 8-aminooctanoic acid, 9-aminononanoic acid, 11-aminoundecanoic acid, 12-amino dodecanoic acid, and 13-aminotridecanoic acid.

In the present embodiment, copolymerized polyamides obtained by polycondensing one of these lactams, diamines, dicarboxylic acids, and aminocarboxylic acids alone or a mixture of two or more thereof can also be used.

Moreover, those obtained by polymerizing these lactams, diamines, dicarboxylic acids, and aminocarboxylic acids up to a stage of a low molecular weight oligomer in a polymerization reactor and turning the low molecular weight oligomer into a high molecular weight polymer with an extruder or the like can also be used suitably.

Examples of polyamides that can be used for the present embodiment may include polyamide 6, polyamide 66, polyamide 46, polyamide 11, polyamide 12, polyamide 610, polyamide 612, polyamide 6/66, polyamide 6/612, polyamide MXD(m-xylylenediamine)·6, polyamide 6T, polyamide 6I, polyamide 6/6T, polyamide 6/6I, polyamide 66/6T, polyamide 66/6I, polyamide 6T/6I, polyamide 6/6T/6I, polyamide 66/6T/6I, polyamide 6/12/6T, polyamide 66/12/6T, polyamide 6/12/6I, polyamide 66/12/6I, polyamide 9T, polyamide 6C, polyamide 6/66/6C, and polyamide 66/6C (I is the abbreviation of isophthalic acid, T is the abbreviation of terephthalic acid, and C is the abbreviation of cyclohexanedicarboxylic acid). Moreover, polyamides obtained by copolymerizing two or more of these polyamides with an extruder or the like can be used.

From the viewpoint of heat resistance, preferable polyamides in the present embodiment are polyamides having an aromatic ring in the repeating structural unit. Specifically, examples thereof may include polyamide MXD (m-xylylenediamine)·6, polyamide 6T, polyamide 6I, polyamide 6/6T, polyamide 6/6I, polyamide 66/6T, polyamide 66/6I, polyamide 6T/6I, polyamide 6/6T/6I, polyamide 66/6T/6I, polyamide 6/12/6T, polyamide 66/12/6T, polyamide 6/12/6I, polyamide 66/12/6I, and polyamide 9T, and the like, particularly, polyamide 6T/6I, polyamide 66/6T/6I, and polyamide 9T. More preferable polyamide is polyamide 9T. These preferable polyamides may be a mixture.

Moreover, of the above-mentioned polyamides, use of polyamides having a melting point of 280°C or more significantly suppresses corrosiveness and enhances heat resistance of the flame-retardant resin composition according to the present embodiment.

The melting point of polyamides in the present embodiment can be measured using a differential scanning calorimeter (for example, made by PerkinElmer, Inc., trade name: DSC-7). As a specific measuring method, a temperature of a polyamide pellet is raised to 340°C from 40°C to at a rate of 50°C/min., and is kept for 2 minutes to melt polyamide sufficiently. Then, the temperature of the polyamide pellet is reduced to 40°C at a rate of 20°C/min., and is kept for 2 minutes. Subsequently, the melting point is expressed using a peak top of an endothermic peak observed when the temperature is raised at a rate of 20°C /min.

The melting point of polyamides is preferably 280°C or more, more preferably 290°C or more, and still more preferably 300°C or more. Use of polyamides having such a melting point makes the effect of the present embodiment more remarkable. The upper limit of the melting point is preferably 360°C, more preferably 340°C, and still more preferably 330°C.

As for a preferable range of the viscosity of polyamides, the viscosity number measured in 96% sulfuric acid according to ISO 307 is within the range of from 50 to 400 mL/g, more preferably within the range of from 70 to 300 mL/g, and still more preferably within the range of from 100 to 200 mL/g.

Polyamides may be a mixture of a plurality of polyamides each having a different viscosity number. In the case where a plurality of polyamides is used, the viscosity number of the polyamide mixture is desirably within the range mentioned above. By actually measuring the viscosity number of the polyamide mixture mixed in a desired blending ratio, it can be easily confirmed whether the viscosity number of the polyamide mixture is within the range of the above-mentioned viscosity number.

The concentration of a terminal amino group in polyamides is not particularly limited. In the case where polyamide is mixed with polyphenylene ether and used, the concentration thereof is preferably from 10 to 80 μmol/g in order to improve compatibility, more preferably from 15 to 65 μmol/g, and still more preferably from 20 to 40 μmol/g. At a concentration of the terminal amino group of the above-mentioned ranges, discoloration at the time of heating polyamide can be prevented beforehand. Also in the case where polyphenylene ether is blended as an additional component, a polymer alloy having well-balanced properties can be obtained at the above-mentioned concentration of the terminal amino group, and it is preferable.

The concentration of a terminal carboxyl group of polyamides is not particularly limited. As the lower limit thereof, 20 μmol/g is preferable, and 30 μmol/g is more preferable. Moreover, as the upper limit thereof, 150 μmol/g is preferable, 100 μmol/g is more preferable, and 80 μmol/g is still more preferable.

In the present embodiment, the ratio of the concentration of the terminal amino group to that of the terminal carboxyl group (concentration of the terminal amino group/concentration of the terminal carboxyl group) influences mechanical properties of the flame-retardant resin composition, and has a preferable range.

The ratio of the concentration of the terminal amino group to that of the terminal carboxyl group is preferably

1.0 or less. The ratio thereof is more preferably 0.9 or less, still more preferably 0.8 or less, and further still more preferably 0.7 or less. Because it is the ratio of the concentration, there is no particular lower limit. A ratio of 0.1 or more, however, is preferable because a strand can be stably taken over by extrusion or the like.

Known methods can be used as a method for adjusting the concentration of these terminal groups of polyamides. Examples thereof may include a method for adding a terminal regulating agent such as diamine compounds, monoamine compounds, dicarboxylic achtid compounds, monocarboxylic acid compounds, acid anhydrides, monoisocyanates, monoacid halides, monoesters, and monoalcohols so as to have a predetermined terminal concentration at the time of polymerizating polyamide.

Specifically, examples of the terminal regulating agents to be reacted with the terminal amino group may include aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid, and isobutyric acid; alicyclic monocarboxylic acids such as cyclohexane carboxylic acid; aromatic monocarboxylic acids such as benzoic acid, toluic acid, α-naphthalene carboxylic acid, β-naphthalene carboxylic acid, methylnaphthalene carboxylic acid, and phenylacetic acid; and mixture thereof. Of these, acetic acid, propionic acid, butyric acid, valeric acid, caproic acid, caprylic acid, lauric acid, tridecanoic acid, myristic acid, palmitic acid, stearic acid, and benzoic acid are preferable, and benzoic acid are more preferable from the viewpoint of reactivity, stability of a capped terminal, price, and the like.

Specifically, examples of the terminal regulating agents to be reacted with the terminal carboxyl group may include aliphatic monoamines such as methylamine, ethylamine, propylamine, butylamine, hexylamine, octylamine, decylamine, stearylamine, dimethylamine, diethylamine, dipropylamine, and dibutylamine; alicyclic monoamines such as cyclohexylamine and dicyclohexylamine; aromatic monoamines such as aniline, toluidine, diphenylamine, and naphthylamine; and a mixture thereof. Of these, butylamine, hexylamine, octylamine, decylamine, stearylamine, cyclohexylamine, and aniline are preferable from the viewpoint of reactivity, the boiling point, stability of capped terminal, price, and the like.

The concentration of the amino terminal group and that of the carboxyl terminal group can be determined by $^1$H-NMR from an integral value of a property signal corresponding to each terminal group. As the specific method, a method according to the method described in Japanese Patent Laid-Open No. 07-228775 is recommended. Deuterated trifluoroacetic acid can be used as a measurement solvent. When measurement is performed with a nuclear magnetic resonance measurement apparatus having sufficient resolution, the number of times of integration in $^1$H-NMR needs to be at least 300 scans.

An active terminal is capped when the terminal group of polyamide is adjusted with a monoamine compound, a monocarboxylic acid compound, or the like. For example, when benzoic acid is used as monocarboxylic acid, a terminal group capped with a phenyl group terminal is produced.

The concentration of these capped terminal groups of polyamides has a preferable upper limit and lower limit. The lower limit of the terminal cap rate in polyamide is preferably 20%, more preferably 40%, still more preferably 45%, and further still more preferably 50%. The upper limit of the terminal cap rate in polyamide is preferably 85%, more preferably 80%, and still more preferably 75%.

The terminal cap rate in polyamide that can be used for the present embodiment can be calculated in accordance with the following formula by measuring each number of the terminal carboxyl group, the terminal amino group, and the capped terminal group capped with a terminal capping agent that exist in polyamide.

$$\text{Terminal cap rate (\%)} = [(\alpha - \beta)/\alpha] \times 100$$

wherein α represents the total number of terminal groups of molecular chains (this is usually equal to twice the number of polyamide molecules), and β represents the total number of the remaining non-capped carboxyl group terminals and amino group terminals.

Further, the moisture content of polyamide used for the present embodiment is preferably within the range of 500 ppm or more and 3000 ppm or less. More preferably, it is 500 ppm or more and 2000 ppm or less.

The moisture content of polyamide is preferably 500 ppm or more from the viewpoint of suppressing deterioration color tone of the pellet at the time of producing the flame-retardant resin composition, and the moisture content thereof is preferably 3000 ppm or less from the viewpoint of suppressing drastic reduction in the viscosity at the time of processing.

As polyarylene sulfide usable for the present embodiment, polyphenylene sulfide can be preferably used. Polyphenylene sulfide (hereinafter, abbreviated as "PPS") is a polymer containing a repeating unit of phenylene sulfide represented by the following general formula. The content of this repeating unit is usually 50 mol %, preferably 70 mol %, more preferably 90 mol % or more:

[-Ar-S-]

wherein S represents a sulfur atom, Ar represents an allylene group, and examples of the allylene group may include p-phenylene group and an m-phenylene group, a substituted phenylene group (as a substituent, an alkyl group having 1 to 10 carbon atoms and a phenyl group are preferable.), a p,p'-diphenylene sulfone group, a p,p'-biphenylene group, a p,p'-diphenylene carbonyl group, and a naphthylene group.

PPS may be a homopolymer having one of an allylene group as a constitutive unit. Alternatively, from the viewpoint of processability and heat resistance, PPS may be a copolymer obtained by mixing and using two or more of different allylene groups. Of these, PPS having the repeating unit of p-phenylene sulfide as a main component is preferable for high processability and heat resistance, and availability. The concentration of chlorine contained in PPS is preferably 1500 ppm or less from the viewpoint of suppressing corrosiveness, and more preferably 900 ppm or less. The concentration of chlorine can be measured according to JPCA-ES01 (Test Method for Halogen-Free Materials) defined by the Japan Electronics Packaging and Circuits Association (JPCA). The method for analysis can be performed with flask combustion treatment ion chromatography.

A method for producing PPS is not particularly limited, and known methods can be used. Usually, examples of the methods may include a method for polymerizing a halogenated aromatic compound (e.g., p-dichlorobenzene) in the presence of sulfur and sodium carbonate; a method for polymerization in the presence of sodium sulfide, sodium hydrogen sulfide and sodium hydroxide, hydrogen sulfide and sodium hydroxide, or sodium amino alkanoate in a polar solvent; and selfcondensation of p-chlorothiophenol. Of these, a method for reacting sodium sulfide with p-dichlorobenzene in an amide-based solvent such as N-methyl pyrrolidone and dimethylacetamide or a sulfone-based solvent such as sulfolane, and the like are preferable. In order to produce a branching structure in molecular chains, trichlorobenzene may be used as a branching agent when necessary.

For example, PPS can be obtained with methods described in U.S. Patent No. 2513188, Japanese Patent Publication Nos. 44-27671, 45-3368, and 52-12240, Japanese Patent Laid-Open No. 61-225217, U.S. Patent No. 3274165, Japanese Patent Publication No. 46-27255, Belgian Patent No. 29437, and Japanese Patent Laid-Open No. 05-222196. The PPS obtained by this polymerization reaction is usually a linear PPS. In the present embodiment, PPS (crosslinked PPS) may be used, in which after the polymerization reaction, heat-treatment at a temperature of not more than the melting point of the PPS (e.g., from 200 to 250°C) is performed in the presence of oxygen to accelerate oxidization crosslinking and properly enhance the polymer molecular weight and viscosity of the PPS. The crosslinked PPS also may include half-crosslinked PPS whose degree of crosslinking is controlled low.

For the PPS, one of the above-mentioned linear PPSs and crosslinked PPSs or a combination of two thereof can be used. Moreover, the PPS has properties such that a melt viscosity at 300°C at a shear rate of 100 second$^{-1}$ is preferably from 10 to 150 Pa·s, more preferably from 10 to 100 Pa·s, and still more preferably from 10 to 80 Pa·s.

In the present embodiment, combined use of the linear PPS and the crosslinked PPS as the PPS is preferable because an effect of reducing the particle size of a dispersed phase of polyphenylene ether is manifested when an alloy of the PPS and polyphenylene ether is used.

The melt viscosity of the PPS can be measured with a capillary rheometer. For example, measurement can be made at a temperature of 300°C and a shear rate of 100 seconds$^{-1}$ by using a Capilograph (made by Toyo Seiki Seisaku-sho, Ltd.) and a capillary having a capillary length = 10 mm and a capillary diameter = 1 mm.

In order to reduce mold deposits, i.e., whitening at the time of molding attributed to the PPS, the PPS containing 0.7% by mass or less of an oligomer needs to be provided. Here, the oligomer contained in the PPS means a substance from which the PPS to be provided is extracted with methylene chloride, and is a substance usually known as impurities of the PPS.

The content of the oligomer can be measured and determined with the following method. 5 g of PPS powder is added to 80 mL of methylene chloride. Soxhlet extraction is carried for 6 hours, followed by cooling to room temperature. The methylene chloride solution after extraction is placed into a weighing bottle. The container used for the above-mentioned extraction is washed 3 times using a total of 60 mL of methylene chloride, and the washing liquid is recovered in the above-mentioned weighing bottle. Next, methylene chloride in the weighing bottle is vaporized and removed by heating at approximately 80°C, and the residue is weighed. Based on the amount of the residue, an amount of the oligomer extracted with methylene chloride, namely, the proportion of the amount of the oligomer existing in the PPS can be determined.

Polyarylates usable for the present embodiment are a polymer containing an aromatic ring and ester bond as a structural unit, and also referred to as polyaryl esters. As polyarylates, polyarylate formed of bisphenol A and terephthalic acid and/or isophthalic acid and having a repeating unit represented by the following formula (4) is preferable. Particularly, more preferably, a mole ratio of terephthalic acid and isophthalic acid is approximately 1:1 (terephthalic acid : isophthalic acid) from the viewpoint of balance between heat resistance and toughness.

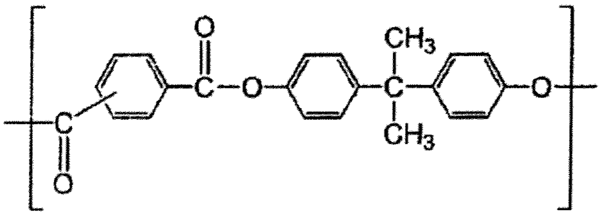

(4)

Commercial products can also be used as polyarylate. For example, a trade name "U polymer" made by Unitika, Ltd., and the like can be used.

The molecular weight of polyarylate is not particularly limited. The number average molecular weight thereof in terms of polystyrene conversion measured with gel permeation chromatography (GPC) is preferably from 5000 to 300000, more preferably from 10000 to 300000, and still more preferably from 10000 to 100000.

At a molecular weight of polyarylate of 5000 or more, heat resistance and mechanical strength tend to be improved. At a molecular weight of polyarylate of 300000 or less, fluidity of the flame-retardant resin composition tends to be improved, and the dispersed phase tends to be micro-dispersed easily.

Polyether sulfone, polyether imide, and polysulfone usable for the present embodiment can be properly used from a known group of amorphous super engineering plastics. Examples of commercial products of polyether sulfone may include "Radel A (registered trademark)" and "Radel R (registered trademark)" made by Solvay Advanced Polymers, L. L. C., "MITSUI PES" made by Mitsui Chemicals, Inc., and "Ultrason E (registered trademark)" made BASF Japan, Ltd. Examples of specific products of polyether imides may include Ultem (registered trademark) by SABIC Innovative Plastics Holding BV. Examples of commercial products of polysulfones may include Udel (registered trademark) and Mindel (registered trademark) made by Solvay Advanced Polymers, L. L. C., and Ultrason S (registered trademark) made by BASF Japan, Ltd.

Polyaryl ketones usable for the present embodiment are a resin containing an aromatic ring, ether bond, and ketone bond in the structural unit. Specific examples thereof may include polyether ketone, polyether ether ketone, and polyether ketone ketone. In the present embodiment, polyether ether ketones having a repeating unit represented by the following formula (5) are particularly suitably used.

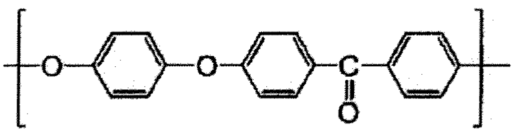

(5)

Commercial products can be used as polyether ether ketones. For example, trade names "PEEK151G (registered trademark)," "PEEK90G (registered trademark)," "PEEK381G (registered trademark)," "PEEK450G (registered trademark)," and "PEK (registered trademark)" made by VICTREX plc., a trade name "Ultrapek (registered trademark)" (polyether ketone ether ketone ketone: PEKEKK) made by BASF AG, and the like can be used. As for polyaryl ketones, one thereof may be used alone, or not less than two thereof may be used in combination. Especially, the trade name "PEEK (registered trademark)" made by Victrex plc. is suitably used.

The melt viscosity of polyaryl ketones is preferably within the range of from 50 to 5000 Pa·s (from 500 to 50000 Poise). The melt viscosity thereof is more preferably from 70 to 3000 Pa·s, still more preferably from 100 to 2500 Pa·s, and further still more preferably from 200 to 1000 Pa·s. At a melt viscosity of polyaryl ketone of 50 Pa·s or more, mechanical strength tends to be improved. At a melt viscosity of polyaryl ketone of 5000 Pa·s or less, molding workability tends to be improved.

The melt viscosity is an apparent melt viscosity measured when a resin heated at 400°C is extruded at a load of 100 kg from a nozzle having an inner diameter of 1 mm and a length of 10 mm.

In the present embodiment, preferable examples in the case where not less than two of thermoplastic resins are selected and used as a mixture may include polyamide/polyphenylene ether, polyphenylene ether/polystyrene, polyphenylene ether/polyphenylene sulfide, polyphenylene ether/polypropylene, and polyphenylene ether/liquid crystal polyester from the viewpoint of flame retardation and reduction in moisture absorption. Of these, a combination of polyamide/polyphenylene ether is more preferable from the viewpoint of flame retardation and reduction in moisture absorption.

In the case where the above-mentioned resins are used as a mixture, a suitable amount of each resin is different.

In the case where one selected from homopolystyrenes, rubber modified polystyrenes, styrene-based elastomers, acrylonitrile-styrene copolymers, copolymers of N-phenylmaleimide and styrene, which are a resin having relatively high affinity with polyphenylene ether, and a mixture thereof is used as a thermoplastic resin other than polyphenylene ether, the content of polyphenylene ether in the thermoplastic resin of the present embodiment is preferably within the range of from 10 to 90% by mass based on 100% by mass of the total amount of the thermoplastic resin of the present embodiment. A more preferable lower limit of the content of polyphenylene ether is 20% by mass, and still more preferably 30% by mass. A more preferable upper limit of the content of polyphenylene ether is 80% by mass, still more preferable 70% by mass, and further still more preferably 60% by mass.

In the case where one selected from polypropylenes, liquid crystal polyesters, polyamides, polyphenylene sulfides, polyether imides, polyether sulfones, polysulfones, polyaryl ketones, which are a resin having relatively low affinity with polyphenylene ether, and a mixture thereof is used as the thermoplastic resin other than polyphenylene ether, the content of polyphenylene ether in the thermoplastic resin of the present embodiment is preferably within the range of from 1 to 60% by mass based on 100% by mass of the total amount of the flame-retardant thermoplastic resin according to the present embodiment. A more preferable lower limit of the content of polyphenylene ether is 5% by mass, still more preferably 10% by mass, and further still more preferably 15% by mass. A more preferable upper limit of the content of polyphenylene ether is 45% by mass, still more preferable 40% by mass, and further still more preferably 35% by mass.

In the present embodiment, in case where one selected from polypropylenes, liquid crystal polyesters, polyamides, polyphenylene sulfides, polyether imides, polyether sulfones, polysulfones, polyaryl ketones, which are a resin having relatively low affinity with polyphenylene ether, and a mixture thereof is used, a compatibilizing agent for polyphenylene ether and a thermoplastic resin other than polyphenylene ether is more preferably contained.

The compatibilizing agent is not particularly limited, and examples thereof may include inorganic metal oxides, organic functional group containing compounds, and copolymers having polystyrene chain-polyolefin chains. As the compatibilizing agent, known compatibilizing agents can be used according to the thermoplastic resins used in combination with polyphenylene ether.

Examples of the inorganic metal oxides may include oxides of one or more of metals selected from zinc, titanium, calcium, magnesium, and silicon. Of these, zinc oxide is preferable from the viewpoint of compatibility.

Examples of the organic functional group containing compounds may include compounds having one or more of functional groups selected from an epoxy group, an oxazolyl group, an imido group, a carboxylic acid group, and an acid anhydride group. The number of each of these functional groups contained may be one, or may be not less than two. In the case where not less than two functional groups are contained, one kind of the functional groups may be contained, and the number of the functional group may be not less than 2; not less than two kinds of the functional groups may be contained, and the number of each functional group may be one; or one kind of the functional groups may be contained, and the number of the functional group may be one, and other kind of the functional groups may be contained, and the number of the functional group may be not less than 2. Off course, not less than two of the functional groups may be contained, and the number of each functional group may be not less than 2. Moreover, examples of copolymers having polystyrene chain-polyolefin chains may include styrene-ethylene butylene copolymers.

A preferable compatibilizing agent in a combination of polyphenylene ether and polypropylene (PP) will be described. A compatibilizing agent is preferably used because polyphenylene ether and PP are essentially incompatible with each other. A polymer alloy made of polyphenylene ether and PP shows a structure in which polyphenylene ether is dispersed in a PP continuous phase. Polyphenylene ether plays an important role in reinforcing heat resistance at a temperature of not less than the glass transition temperature of an amorphous portion of PP.

For improvement of compatibility of polyphenylene ether and PP, a copolymer having segment chains having high compatibility with polyphenylene ether and segment chains with high compatibility with PP can be used as an admixture. Examples of the copolymer having such compatibility may include copolymers having polystyrene chain-polyolefin chain, copolymers having polyphenylene ether chain-polyolefin chain, and hydrogenated block copolymers prepared by hydrogenating a block copolymer formed of at least two polymer blocks A mainly containing a vinyl aromatic compound and at least one polymer block B mainly containing a conjugated diene compound. Of these, the hydrogenated block copolymers are preferable from the viewpoint of thermal stability.

Examples of the hydrogenated block copolymers as the compatibilizing agent for polyphenylene ether and PP here may include hydrogenated block copolymers prepared by hydrogenating a block copolymer having a structure such as A-B-A, A-B-A-B, $(A-B-)_4$-Si, and A-B-A-B-A. Here, A means a polymer block mainly containing a vinyl aromatic compound, and B means a polymer block mainly containing a conjugated diene compound.

The content of the vinyl aromatic compound in polymer block A and the content of the conjugated diene compound in polymer block B each are at least 70% by mass or more. Further, the hydrogenated block copolymer is a block copolymer in which olefin unsaturated bonds derived from the conjugated diene compound in the block copolymer formed of an aromatic vinyl compound and a conjugated diene compound are reduced by the hydrogenation reaction to 50% or less, preferably 30% or less, and more preferably 10% or less.

The block copolymer useful as the compatibilizing agent for polyphenylene ether and PP here is the same as the block copolymers that are the styrene-based elastomers mentioned above. In the case where PP is used as a thermoplastic resin other than polyphenylene ether, this block copolymer has both of function as a compatibilizing agent

and function as an impact improving agent. Of the block copolymers, examples thereof that can be used more suitably as the compatibilizing agent for polyphenylene ether and PP may include the so-called high vinyl type block copolymers that are a conjugated diene compound in which the amount of 1,2-vinyl bonds of a polybutadiene portion is from 50 to 90%. Of course, other block copolymers can also be used.

A preferable compatibilizing agent in a combination of polyphenylene ether and polyamide is described in detail in Japanese Patent Laid-Open No. 08-8869, Japanese Patent Laid-Open No. 09-124926, and the like. In the present embodiment, all of these known compatibilizing agents can be used, and can also be used in combination.

Of these various compatibilizing agents, maleic acid or derivatives thereof, citric acid or derivatives thereof, fumaric acid or derivatives thereof, and polyphenylene ether pellet denatured in advance with these are preferable.

A preferable amount of the compatibilizing agent in the present embodiment is from 0.01 to 25 parts by mass based on 100 parts by mass of a mixture of polyamide and polyphenylene ether. The amount thereof is more preferably from 0.05 to 10 parts by mass, and still more preferably from 0.1 to 5 parts by mass.

At this time, preferably, polyphenylene ether particles exist as a dispersed phase having an average particle size of from 0.1 to 5 μm in a polyamide continuous phase. More preferably, the average particle size is within the range of from 0.3 to 3 μm, and still more preferably from 0.5 to 2 μm. An impact resisting agent described later preferably exists in the polyphenylene ether dispersed phase.

In the mixture of polyphenylene ether with polyamide, a preferable upper limit of reduced viscosity of polyphenylene ether (ηsp/c:dL/g, a chloroform solution in a concentration of 0.5 g/dL, measured at 30°C) is 0.55 dL/g, more preferably 0.45 dL/g, and still more preferably 0.35 dL/g. A preferable lower limit thereof is 0.20 dL/g, more preferably 0.25 dL/g, and still more preferably 0.29 dL/g.

The case of a combination of polyphenylene ether and PPS will be described. A composition made of polyphenylene ether and PPS preferably presents a structure in which polyphenylene ether is dispersed in a PPS matrix. Here, making use of the high glass transition temperature thereof, polyphenylene ether plays an important role in reinforcing heat resistance at a temperature of not less than the glass transition temperature of the amorphous portion of PPS. Polyphenylene ether and PPS are incompatible with each other, and in order to improve compatibility (sometimes referred to as admixability), a compound containing an epoxy group and/or a compound containing an oxazolyl group is useful. Use of this admixture provides an effect of significantly reducing burr produced in molded products when a pellet of the flame-retardant resin composition according to the present embodiment is molded. However, in the case of not expecting the effect, addition of the compatibilizing agent is unnecessary in the present embodiment.

Of these, copolymers of an unsaturated monomer having an epoxy group and/or an oxazolyl group and a monomer mainly containing styrene can be preferably used. The monomer mainly containing styrene has no problem in the case where 100% by mass of the monomer is the styrene component. In the case where other monomer copolymerizable with styrene exists, however, the monomer mainly containing styrene preferably contains at least 65% by mass or more of a styrene monomer in order for the copolymer chains of the monomer mainly containing styrene to keep compatibility with polyphenylene ether, and more preferably contains from 75 to 95% by mass. Specifically, examples thereof may include (i) copolymers of an unsaturated monomer having an epoxy group and/or an oxazolyl group and a styrene monomer; and (ii) copolymers of an unsaturated monomer having an epoxy group and/or an oxazolyl group and styrene/acrylonitrile = 90 to 75% by mass/10 to 25% by mass.

Examples of the above-mentioned unsaturated monomers having an epoxy group may include glycidyl methacrylate, glycidyl acrylate, vinyl glycidyl ether, glycidyl ether of hydroxyalkyl(meth)acrylate, glycidyl ether of polyalkyleneglycol(meth)acrylate, glycidyl itaconate, and the like. glycidyl methacrylate is preferable. Moreover, examples of vinyl oxazoline compounds as the above-mentioned unsaturated monomers having an oxazolyl group may include 2-isopropenyl-2-oxazoline, and 2-isopropenyl-2-oxazoline is easily available and can be preferably used.

Examples of other unsaturated monomers copolymerized with the unsaturated monomers having an epoxy group and/or an oxazolyl group may include vinyl aromatic compounds such as styrene, cyanidated vinyl monomers such as acrylonitrile, vinyl acetate, and (meth)acrylic acid esters as a copolymerization component. In order to act effectively as the compatibilizing agent for PPS and polyphenylene ether, at least 65% by mass or more of the styrene monomer is preferably contained in the component except the unsaturated monomer having an epoxy group and/or an oxazolyl group.

In the copolymer, preferably from 0.3 to 20% by mass of the unsaturated monomer having an epoxy group and/or an oxazolyl group is contained. More preferably, from 1 to 15% by mass thereof, and still more preferably from 3 to 10% by mass thereof is contained. The amount of the unsaturated monomer having an epoxy group and/or an oxazolyl group in the copolymer is preferably 0.3 % by mass or more and 20% by mass or less. Use of that unsaturated monomer in this range can highly maintain compatibility of polyphenylene ether and PPS. Thereby, burr produced in molded products molded using the obtained flame-retardant resin composition can be greatly suppressed to provide molded product well-balanced in heat resistance, toughness (impact strength), and mechanical strength.

Examples of these copolymers may include styrene-glycidyl methacrylate copolymers, styrene-glycidyl methacrylate-methyl methacrylate copolymers, styrene-glycidyl methacrylate-acrylonitrile copolymers, styrene-vinyl oxazoline copolymers, and styrene-vinyl oxazoline-acrylonitrile copolymers.

A preferable blending amount of this compatibilizing agent is from 0.5 to 5 parts by mass based on a total of 100 parts by mass of the above-mentioned polyphenylene ether and PPS, more preferably from 1 to 5 parts by mass, and still more preferably from 1 to 3 parts by mass. At a blending amount of the compatibilizing agent of 0.5 parts by mass or more, compatibility of PPS and polyphenylene ether is improved. At a blending amount of the compatibilizing agent of 5 parts by mass or less, polyphenylene ether that forms the dispersed phase has an average particle size of 10 μm or less, and burr produced in molded products molded using the obtained flame-retardant resin composition can be greatly suppressed. Additionally, molded products well-balanced in heat resistance, toughness (impact strength), and mechanical strength can be provided. In the case of using no admixture, high heat resistance and impact resistance can be given to the flame-retardant resin composition.

At this time, preferably, polyphenylene ether particles exist in the PPS continuous phase as a dispersed phase having an average particle size of 10 μm or less. More preferably, the average particle size is 8 μm or less, and is still more preferably 5 μm or less. In order to prevent bad appearance and a peeling-off phenomenon of the obtained composition, it is effective that the dispersion average particle size is less than 10 μm. An impact resisting agent described later preferably exists in a polyphenylene ether dispersed phase.

As a compatibilizing agent in a combination of polyphenylene ether and liquid crystal polyesters, compounds having an epoxy group, an oxazolyl group, an imido group, and an acid anhydride group are preferable. Of these, compounds having an epoxy group are more preferable.

Specific examples thereof may include glycidyl methacrylate/styrene copolymers, glycidyl methacrylate/styrene/methyl methacrylate copolymers, glycidyl methacrylate/styrene/methyl methacrylate/methacrylate copolymers, glycidyl methacrylate/styrene/acrylonitrile copolymers, vinyl oxazoline/styrene copolymers, N-phenylmaleimide/styrene copolymers, N-phenylmaleimide/styrene/maleic anhydride copolymers, and styrene/maleic anhydride copolymers. The compounds may also be graft copolymers such as graft copolymers of ethylene/glycidyl methacrylate copolymers and polystyrenes. Of these, glycidyl methacrylate/styrene copolymers, vinyl oxazoline/styrene copolymers, N-phenylmaleimide/styrene copolymers, and N-phenylmaleimide/styrene/maleic anhydride copolymers are preferable. Glycidyl methacrylate/styrene copolymers are still more preferable. The proportion of a compound having one or more of functional groups selected from an epoxy group, an oxazolyl group, an imido group, a carboxylic acid group, and an acid anhydride group, and a styrene-based compound in the copolymer is not particularly limited. From the viewpoint of occurrence of silver streaks during injection molding or die drool during extrusion, the compound having one or more of functional groups selected from an epoxy group, an oxazolyl group, an imido group, a carboxylic acid group, and an acid anhydride group is preferably 50% by mass or less.

A preferable blending amount of the compatibilizing agent is 0.1 parts by mass or more based on a total of 100 parts by mass of polyphenylene ether and liquid crystal polyester from viewpoint of tensile strength, and 10 parts by mass or less from the viewpoint of flame retardance. The blending amount thereof is more preferably 1 part by mass or more and 7 parts by mass or less, and still more preferably 3.5 parts by mass or more and 6 parts by mass or less.

Moreover, a method for adding a compatibilizing agent is not particularly limited. A method for adding a compatibilizing agent with polyphenylene ether, or a method for producing a masterbatch prepared by melt kneading a compatibilizing agent and liquid crystal polyester in advance, and subsequently adding the masterbatch with polyphenylene ether is preferable. At this time, polyphenylene ether needs to form a dispersed phase and liquid crystal polyester needs to form a continuous phase. Formation of the continuous phase by liquid crystal polyester leads to high chemical resistance and rigidity.

These distributed forms can be easily determined by observing, for example, using a transmission type microscope. A preferable particle size of dispersed polyphenylene ether is 40 μm or less. More preferably, it is 20 μm or less. In the case where an impact resisting agent described later is blended, the impact resisting agent preferably exists in the polyphenylene ether dispersed phase. It is also useful as the flame-retardant resin composition according to the present embodiment to provide a sea-island-lake structure where liquid crystal polyester further exists in the polyphenylene ether phase that is the dispersed phase.

Examples of specific methods for providing a sea-island-lake structure may include a method in which using an extruder having one or more feed openings in the course thereof, polyphenylene ether and part of liquid crystal polyester and the compatibilizing agent for them when necessary are supplied from one feed opening of the extruder, the remaining liquid crystal polyester is supplied from another feed opening in the course of the extruder.

In the present embodiment, as a compatibilizing agent in the case where a resin such as polyarylates, polyether imides, polyether sulfones, polysulfones, and polyaryl ketones is used in combination with polyphenylene ether, all of the compatibilizing agents for polypropylene, polyamide, PPS and liquid crystal polymer, and polyphenylene ether mentioned above can be used, for example. These resins generally have a high process temperature, and the terminal functional groups thereof are often inactivated by a reaction. Preferably, these resins are subjected to a certain reaction (e.g., a reaction to cut molecular chains by heat, peroxides, and the like), and subsequently, the above-mentioned compatibilizing agent is properly selected and used.

In the present embodiment, without the above-mentioned reaction, the resins can be made compatible with polyphenylene ether. Specifically, addition of a small amount of polyarylates as the compatibilizing agent for polyphenylene ether and polyaryl ketone is very useful to enhance compatibility of polyphenylene ether and polyaryl ketone.

Next, at least one phosphinate salt that is the (B) component of the present embodiment and selected from phosphinate salts represented by the following formula (I) and/or diphosphinate salts represented by the following formula (II), and a condensate thereof will be described.

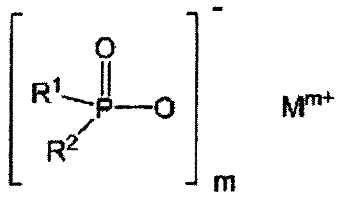

(I)

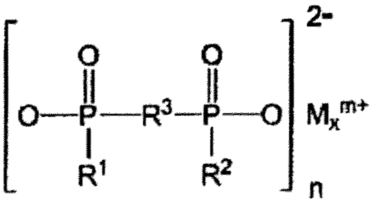

(II)

wherein $R^1$ and $R^2$ may be the same or different from each other, and represent linear or branched $C_1$ to $C_6$-alkyl and/or aryl or phenyl; $R^3$ represents linear or branched $C_1$ to $C_{10}$-alkylene, $C_6$ to $C_{10}$-arylene, $C_6$ to $C_{10}$-alkylarylene or $C_6$ to $C_{10}$-arylalkylene; M represents one or more selected from calcium (ion), magnesium (ion), aluminum (ion), zinc (ion), bismuth (ion), manganese (ion), sodium (ion), potassium (ion), and a protonated nitrogen base; m is 2 or 3, n is an integer of from 1 to 3, and x is 1 or 2.

As for the phosphinate salts as the (B) component in the present embodiment, those produced in an aqueous solution using phosphinic acid, metallic carbonate, metal hydroxide, or metal oxide can be used effectively, as described in European Patent Application Publication No. 699708 and Japanese Patent Laid-Open No. 08-73720, for example.

These are essentially a monomeric compound. However, depending on a reaction condition, examples thereof also may include polymeric phosphinate salts that are a condensate having a degree of condensation of from 1 to 3 according to an environment.

The phosphinate salts of the present embodiment may be mixed in any composition in the range not to impair the effect of the present embodiment. From the viewpoint of flame retardance and suppression of mold deposits, the phosphinate salts contain preferably 90% by mass or more of phosphinic acid salt represented by the following general formula (I), more preferably 95% by mass or more, and still more preferably 98% by mass or more.

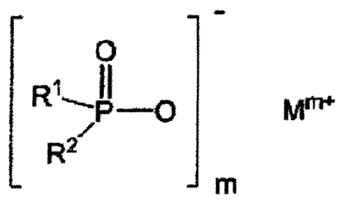

(I)

wherein $R^1$ and $R^2$ may be the same or different from each other, and represent linear or branched $C_1$ to $C_6$-alkyl and/or aryl or phenyl; M represents one or more selected from calcium (ion), magnesium (ion), aluminum (ion), zinc (ion), bismuth (ion), manganese (ion), sodium (ion), potassium (ion), and a protonated nitrogen base; and m is 2 or 3.

Examples of preferable phosphinic acids for forming the phosphinate salts of the present embodiment may include one or more selected from dimethylphosphinic acid, ethylmethylphosphinic acid, diethylphosphinic acid, methyl-n-propylphosphinic acid, methane-di(methylphosphinic acid), benzene-1,4-(dimethylphosphinic acid), methylphenylphosphinic acid, diphenylphosphine acids, and a mixture thereof. Of these, one or more selected from dimethylphosphinic acid, ethylmethylphosphinic acid, diethylphosphinic acid, and a mixture thereof are preferable.

A preferable metallic component for forming the phosphinate salts of the present embodiment is one or more selected from calcium ion, magnesium ion, aluminum ion, zinc ion, bismuth ion, manganese ion, sodium ion, and potassium ion. One or more selected from calcium ion, magnesium ion, aluminum ion, and zinc ion are more preferable.

Examples of a preferable protonated nitrogen base may include ammonia, melamine, and protonated base of triethanolamine, and $NH_4^+$ is particularly preferable.

Preferable examples of the formed phosphinate salts may include one or more selected from calcium dimethylphosphinate, magnesium dimethylphosphinate, aluminum dimethylphosphinate, zinc dimethylphosphinate, calcium ethylmethylphosphinate, magnesium ethylmethylphosphinate, aluminum ethylmethylphosphinate, zinc ethylmethylphosphinate, calcium diethylphosphinate, magnesium diethylphosphinate, aluminum diethylphosphinate, zinc diethylphosphinate, calcium methyl-n-propylphosphinate, magnesium methyl-n-propylphosphinate, aluminum methyl-n-propylphosphinate, zinc methyl-n-propylphosphinate, calcium methane-di(methylphosphinate), magnesium methane-di(methylphosphinate), aluminum methane-di(methylphosphinate), zinc methane-di(methylphosphinate), calcium benzene-1,4-(dimethylphosphinate), magnesium benzene-1,4-(dimethylphosphinate), aluminum benzene-1,4-(dimethylphosphinate), zinc benzene-1,4-(dimethylphosphinate), calcium methylphenylphosphinate, magnesium methylphenylphosphinate, aluminum methylphenylphosphinate, zinc methylphenylphosphinate, calcium diphenylphosphinate, magnesium diphenylphosphinate, aluminum diphenylphosphinate, and zinc diphenylphosphinate.

From the viewpoint of flame retardance and suppression of mold deposits, one or more selected from calcium dimethylphosphinate, aluminum dimethylphosphinate, zinc dimethylphosphinate, calcium ethylmethylphosphinate, aluminum ethylmethylphosphinate, zinc ethylmethylphosphinate, calcium diethylphosphinate, aluminum diethylphosphinate, and diethylzinc phosphinate are preferable, and aluminum diethylphosphinate is more preferable.

An unreacted material or a by-product may remain or be intermingled in the phosphinate salts in the present embodiment unless the effect of the present embodiment is impaired.

In the present embodiment, a preferable content of phosphinic acid is from 1 to 80 parts by mass based on 100 parts by mass of the (A) thermoplastic resin. The content thereof is more preferably from 2 to 60 parts by mass, still more preferably from 2 to 40 parts by mass, and further still more preferably from 4 to 30 parts by mass. In order to manifest sufficient flame retardance, the content of phosphinic acid is preferably 1 part by mass or more. From the viewpoint of maintaining mechanical properties and suppressing corrosiveness, the content of phosphinic acid is preferably 80 parts by mass or less.

The particle size of phosphinic acid may be any size as long as the particle size is in the range not to impair characteristics of the present embodiment. However, a preferable lower limit of the number average particle size thereof is 0.1 μm, and is more preferably 0.5 μm. Moreover, a preferable upper limit of the number average particle size is 200 μm, and is more preferably 45 μm.

In order not to deteriorate handling properties and bite into the extruder or the like, the lower limit of the number average particle size of phosphinate salts is preferably 0.1 μm. In order not to deteriorate manifestation of mechanical strength and surface good appearance of mold products of the flame-retardant resin composition, the upper limit thereof is preferably 200 μm.

The average particle size of phosphinate salts can be measured and analyzed by using a laser diffraction particle size distribution analyzer (for example, made by Shimadzu Corp., trade name: SALD-2000), and dispersing phosphinate salts in methanol/water = 50/50% by mass. Phosphinate salts can be dispersed in methanol water by adding water and phosphinic acid salt to a stirring tank provided with an ultrasonic diffusion machine and/or a stirrer. The dispersion liquid is sent to a measurement cell through a pump, and the particle size is measured by laser diffraction. The number average particle size can be calculated from frequency distribution of particle sizes and the number of particles obtained by measurement.

The (C) basic compound of the present embodiment is not particularly limited as long as it is basic. From the viewpoint of suppressing corrosiveness, one or more selected from hydroxides and oxides of one or more of elements selected from the IIA group elements in the periodic table and aluminum are preferable. Examples thereof may include one or more of hydroxides and oxides selected from calcium, magnesium, and aluminum. From the viewpoint of efficiency of suppressing corrosiveness by the amount to be added, one or more of hydroxides of one or more of elements selected from the IIA group elements in the periodic table and aluminum are more preferable. Examples thereof may include one or more of hydroxides selected from calcium, magnesium, and aluminum.

Of these, specific examples of preferable basic compounds may include calcium hydroxide and/or calcium oxide from the viewpoint of suppression of corrosiveness by the amount to be added, flame retardance, and reflow resistance. Calcium hydroxide is still more preferable.

The (C) basic compound needs to be in the range of from 0.01 to 10 parts by mass based on 100 parts by mass of the (B) component, and is preferably from 0.08 to 7 parts by mass, and more preferably from 0.2 to 5 parts by mass. At 0.01 parts by mass or more, preferably, corrosiveness of the flame-retardant resin composition can be suppressed. At 10 parts by mass or less, preferably, extrusion processability and injection molding stability are improved, and reflow resistance after water absorption, flame retardance, molding processability, and mechanical physical properties can be improved.

The number average particle size of the basic compound is not particularly limited, a range of from 50 nm to 100 μm is preferable, from 100 nm to 25 μm is more preferable, from 100 nm to 10 μm is still more preferable, and from

100 nm to 5000 nm is further still more preferable. From the viewpoint of reactivity with the corrosive component considered to be derived from the (B) phosphinate salts, the (C) basic compound is preferably micro-dispersed. By use of the basic compound having a number average particle size of from 100 nm to 25 μm, reflow resistance after water absorption of the flame-retardant resin composition is improved, and the effect of suppressing corrosiveness is demonstrated more significantly.

The number average particle size of the basic compound is determined by photographing with a scanning electron microscope or the like, and actually measuring the particle size. The number of particles to be measured is from 450 to 550 pieces. The particle size may be manually measured using a photograph properly enlarged, or may be measured semi-automatically using an appropriate image processing apparatus.

Calcium hydroxide and calcium oxide particularly preferable among the basic compounds will be described.

The purity of calcium hydroxide ($Ca[OH]_2$) usable in the present embodiment may be any purity as long as the purity is in a range not to impair characteristics of the present embodiment.

Examples of calcium hydroxide generally circulated may include slaked lime. For slaked lime, various properties are specified as industrial lime (JIS R9001:2006) in Japanese Industrial Standard. A preferable purity of calcium oxide in the slaked lime in the case where industrial lime is used as calcium hydroxide is a purity of industrial slaked lime grade 2 or more.

Calcium hydroxide is obtained by reacting calcium oxide with water. For this reason, in JIS R9001:2006, the purity of calcium hydroxide is represented by the content of calcium oxide. A preferable purity is 65% by mass or more as calcium oxide in slaked lime. The purity thereof is more preferably 70% by mass or more, is still more preferably 72.5% by mass or more, and is further still more preferably 75% by mass or more.

Examples of other components included in industrial slaked lime include $CO_2$, $SiO_2$, $Al_2O_3$, $Fe_2O_3$, and MgO. Of these, the total content of $SiO_2$, $Al_2O_3$, $Fe_2O_3$, and MgO is preferably 10% by mass or less in slaked lime, more preferably 5% by mass or less, and still more preferably 3% by mass or less. In order to suppress reduction in mechanical properties of the flame-retardant resin composition, the concentration of these inorganic impurities is preferably suppressed low.

As the particle size of calcium hydroxide, those substantially having no fineness residue of 590 μm defined by JIS R9001:2006 are preferable. More preferably, the fineness residue of 149 μm is 15% by mass or less, still more preferably 10% by mass or less, and further still more preferably 5% by mass or less. A preferable average particle size is 100 μm or less, more preferably 25 μm or less, still more preferably 10 μm or less, and further still more preferably 5000 nm or less. At a lower limit of 50 nm or more, calcium hydroxide can be used without a problem. However, in the case where handling properties are enhanced by a granulation process or the like, for example, calcium hydroxide having an average particle size of 50 nm or less can also be used preferably.

The above-mentioned properties may be satisfied when industrial slaked lime grade 2 or more is used. However, as calcium hydroxide having the purity, the number average particle size, and the specific reactivity, the so-called highly reactive calcium hydroxide, i.e., calcium hydroxide having a BET specific surface area of 30 $m^2/g$ or more, and ultrafine particle calcium hydroxide having a BET specific surface area of 30 $m^2/g$ or more and an average particle size of 5000 nm or less are effective.

The purity of calcium oxide (CaO) usable in the present embodiment may be any purity as long as the purity is within the range not to impair characteristics of the present embodiment.

Examples of calcium oxide usually circulated may include calcined lime. For calcined lime, various properties are specified as industrial lime (JIS R9001:2006) in Japanese Industrial Standard.

In the case where industrial calcined lime is used as calcium carbonate, a preferable purity of calcium oxide in the calcined lime is a purity of industrial slaked lime grade 2 or more. A preferable purity is 80% by mass or more as calcium oxide in slaked lime. The purity thereof is more preferably 90% by mass or more, still more preferably 93% by mass or more, and further still more preferably 95% by mass or more.

Examples of other components contained in industrial calcined lime may include $CO_2$, $SiO_2$, $Al_2O_3$, $Fe_2O_3$, and MgO. Of these, the total content of $SiO_2$, $Al_2O_3$, $Fe_2O_3$, and MgO is preferably 10% by mass or less in calcined lime, more preferably 5% by mass or less in calcined lime, and still more preferably 3% by mass or less in calcined lime. In order to suppress reduction in mechanical properties and flame retardance of the flame-retardant resin composition, the concentration of these inorganic impurities is preferably suppressed low.

The average particle size of calcium oxide is preferably 100 μm or less, more preferably 25 μm or less, still more preferably 10 μm or less, and further still preferably 5 μm or less. At a lower limit of 50 nm or more, calcium oxide can be used with no particular problem. In order to manifest a high effect of suppressing corrosiveness and maintaining high mechanical strength of the flame-retardant resin composition, the average particle size of calcium oxide is preferably 100 μm or less. Moreover, in order not to deteriorate handling properties, the average particle size thereof is preferably 50 nm or more. However, in the case where handling properties are enhanced by a granulation process or the like, for example, calcium oxide having an average particle size of 50 nm or less can also be used preferably.

From the viewpoint of improvement in mechanical physical properties and improvement in heat resistance,

preferably, an inorganic filler is further contained in the present embodiment as a (D) component.

Examples of the inorganic filler usable for the present embodiment may include fiber-like, grain-like, plate-like or needle-like inorganic reinforcing materials such as glass fibers, potassium titanate fibers, gypsum fibers, brass fibers, stainless steel fibers, steel fibers, ceramic fibers, boron whisker fibers, mica, talc, silica, calcium carbonate, kaolin, calcined kaolin, wollastonite, xonotlite, apatite, glass beads, glass flakes, titanium oxide and carbon black for coloring. Two or more of these inorganic fillers may be used in combination. Of these, more preferable examples of the inorganic filler may include glass fibers, carbon fibers, glass beads, talc, mica, wollastonite, and kaolin. As the inorganic filler, those subjected to surface treatment by a known method using a surface treating agent such as a silane coupling agent may also be used.

As for the amount of the inorganic filler used as the (D) component, a preferable upper limit thereof in order to give mechanical strength and thermal stabilization is 65% by mass based on 100% by mass of the flame-retardant resin composition, more preferably 55% by mass, still more preferably 50% by mass, and further still more preferably 45% by mass. A preferable lower limit thereof is 5% by mass based on 100% by mass of the flame-retardant resin composition, more preferably 10% by mass, and still more preferably 20% by mass. The upper limit of the amount of the inorganic filler blended is preferably 65% by mass in order not to cause metal wear of an extruder, a molding machine, or the like and not to further deteriorate metallic corrosion. The lower limit of the amount of the inorganic filler blended is preferably 5% by mass in order to give a higher heat deflection temperature and mechanical strength.

Specific inorganic fillers act as a nucleating agent for polyamides. Examples of the inorganic filler acting as a nucleating agent of polyamides may include mica, talc, silica, calcium carbonate, kaolin, wollastonite, apatite, glass flake, and titanium oxide. A preferable upper limit in the case of adding these inorganic fillers as a nucleating agent to the flame-retardant resin composition is 5% by mass based on 100% by mass of the flame-retardant resin composition, more preferably 3% by mass, still more preferably 2% by mass, and further still more preferably 1% by mass. A preferable lower limit thereof is 0.05% by mass based on 100% by mass of the flame-retardant resin composition, more preferably 0.1% by mass, and still more preferably 0.5% by mass. The upper limit of the amount of the inorganic filler blended is desirably 5% by mass in order not to deteriorate impact resistance of the flame-retardant resin composition. The lower limit of the amount of the inorganic filler blended is preferably 0.5% by mass in order to effectively accelerate a crystallization rate of polyamide.

The flame-retardant resin composition of the present embodiment may further contain a flame retardant other than the (B) component in the range not to impair characteristics of the present embodiment. As the flame retardant in this case, an inorganic or organic flame retardant containing substantially no bromine and chlorine is more preferable.

Containing substantially no bromine and chlorine in the present embodiment means that the total concentration of bromine and chlorine in the flame retardant is an amount of less than 1% by mass. More preferably, the total concentration thereof is less than 5000 ppm, and still more preferably less than 1000 ppm. The lower limit in this case is zero. The content of bromine and chlorine in the present embodiment can be measured according to JPCA-ES01 (Test Method for Halogen-Free Materials) defined by the Japan Electronics Packaging and Circuits Association (JPCA). The method for analysis can be performed with flask combustion treatment ion chromatography.

Specific examples of the other flame retardant that may be contained in the flame-retardant resin composition of the present embodiment may include known inorganic flame retardants represented by nitrogen containing compounds, zinc containing compounds, magnesium hydroxide, aluminum hydroxide, and the like; organophosphate esters represented by triphenyl phosphate, triphenyl phosphate hydroxide, bisphenol A bis(diphenyl phosphate), and the like; phosphazene-based compounds described in Japanese Patent Laid-Open No. 11-181429; and silicone oils, red phosphorus, and other known flame retardants.

While the phosphazene compounds have annular structures and linear structures represented by the following general formula (6), the cyclic compounds are preferable. Phenoxy phosphazene compounds having a six membered-ring and an eight membered-ring wherein n = 3 and 4 are more preferable.

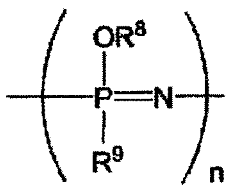

(6)

wherein $R^8$ and $R^9$ each independently represent an aliphatic group having from 1 to 20 carbon atoms or an aromatic group, and n is an integer of not less than 3.

These compounds may be crosslinked by one or more of crosslinking groups selected from the group consisting of a phenylene group, a biphenylene group, and a group represented by the following general formula (7).

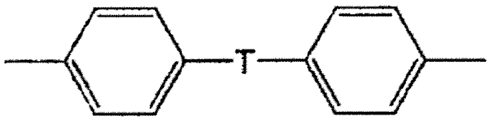

(7)

wherein T represents $-C(CH_3)_2-$, $-SO_2-$, -S-, or -O-.

The phosphazene compounds represented by the general formula (6) are a known compound, and are described in "Inorganic Polymers," Prentice-Hall International, Inc., 1992, P61-140, written by James E. Mark, Harry R. Allcock and Robert West, for example.

Synthesis examples for obtaining the above-mentioned phosphazene compounds are described in Japanese Patent Publication No. 03-73590, Japanese Patent Laid-Open Nos. 09-71708, 09-183864, and 11-181429, and the like.

For example, in synthesis of a non-crosslinked cyclic phenoxy phosphazene compound, according to a method described in "Phosphorus-Nitrogen Compounds," Academic Press, Inc., (1972), written by H. R. Allcock, a non-crosslinked cyclic phenoxy phosphazene compound is obtained by adding a toluene solution of sodium phenolate in 580 g of a 20% chlorobenzene solution containing 1.0 unit mol (115.9 g) of a dichlorophosphazene oligomer (mixture of 62% of a trimer and 38% of a tetramer) under stirring, and reacting the prepared solution at 110°C for 4 hours, followed by refining.

As a phosphorus-based flame retardant of the present embodiment, phosphazene compounds are preferable. The phosphazene compound has a content of phosphorus in the compound higher than that of ordinary phosphate ester compounds. For that reason, only a small amount of the phosphazene compound to be added can ensure sufficient flame retardance. Moreover, the phosphazene compound has excellent hydrolysis properties and thermal decomposition properties so that reduction in physical properties of the flame-retardant resin composition is suppressed. Accordingly, the phosphazene compounds are preferable. Further, phosphazene compounds having an acid value of 0.5 or less are more preferable for flame retardance, water resistance, and electrical properties thereof.

In the present embodiment, fluorine-based polymers represented by tetrafluoroethylene and the like, which are known as a dropping inhibitor, can be also used if the amount thereof is less than 2% by mass in the flame-retardant resin composition.

The flame-retardant resin composition of the present embodiment may also contain a nitrogen containing compound in the range not to impair characteristics of the present embodiment. Examples of a preferable compound as the nitrogen containing compound may include adducts formed of melamine and phosphoric acid.

Specific examples of the adducts formed of melamine and phosphoric acid may include (i) reaction products of melamine and polyphosphoric acid, and/or reaction products of a condensate of melamine and polyphosphoric acid; and (ii) one or more selected from nitrogen containing phosphoric acid salt represented by the formula $(NH_4)_yH_{(3-y)}PO_4$ or $(NH_4PO_3)_z$ (wherein y is from 1 to 3, and z is from 1 to 10000), ammonium hydrogenphosphate, ammonium dihydrogenphosphate, and/or ammonium polyphosphate.

Of compounds represented by the chemical formula $(C_3H_6N_6 \cdot HPO_3)_n$ (wherein n designates the degree of condensation), compounds obtained from reaction products of (i) melamine and substantially an equimolar amount of at least one of (ii) phosphoric acid, pyrophosphoric acid, and polyphosphoric acid can be preferably used.

More specifically, examples thereof may include one or more selected from dimelamine pyrophosphate, melamine polyphosphate, melem polyphosphate, melam polyphosphate acid, melon polyphosphate, and mixed polysalts thereof. Of these, polyphosphoric acid melamine is more preferable.

A method for producing these is not particularly limited. Examples thereof may include a method for heating condensing melamine phosphate under a nitrogen atmosphere. Examples of phosphoric acids that form melamine phosphate specifically may include orthophosphoric acid, phosphorous acid, hypophosphorous acid, metaphosphoric acid, pyrophosphoric acid, triphosphoric acid, and tetraphosphoric acid. Particularly, polyphosphoric acid melamine obtained by condensing an adduct of melamine using orthophosphoric acid and pyrophosphoric acid is highly effective as a flame retardant, and preferable.

Moreover, preferably, heat resistance is increased at a degree of condensation n of melamine polyphosphate of 5 or more.

Melamine polyphosphate may be an addition salt of an equimolar amount of melamine and polyphosphoric acid. Examples of polyphosphoric acid that forms an addition salt with melamine may include the so-called condensed phosphoric acid, i.e., chain polyphosphoric acid and cyclic polymetaphosphoric acid. The degree of condensation n of these polyphosphoric acids is not particularly limited, and usually, it is from 3 to 50. Preferably, the degree of condensation n of the polyphosphoric acid used here is 5 or more from the viewpoint of heat resistance of the melamine polyphosphate addition salt obtained.

Examples of methods for producing a melamine polyphosphate addition salt may include a method in which a slurry in which a mixture of melamine and a polyphosphoric acid is dispersed in water is prepared, and the slurry is mixed well to form the reaction product of melamine and the polyphosphoric acid into particulates; subsequently, the

slurry is filtered, washed and dried, and baked when necessary; and the obtained solid is ground to obtain a melamine polyphosphate addition salt as powder.

In the adduct formed of melamine and phosphoric acid, an unreacted material or a by-product may remain and be intermingled unless the effect of the present embodiment is impaired.

The zinc containing compounds usable for the present embodiment are not particularly limited, and examples thereof may include all of organic zinc containing compounds such as zinc stearate and inorganic zinc containing compounds such as zinc oxide. Of these, a preferable zinc containing compound is the inorganic zinc containing compounds. Of these, one or more selected from zinc oxide, zinc sulfide, zinc borate, and zinc stannate are more preferable, and zinc borate represented by $\alpha ZnO \cdot \beta B_2O_3 \cdot \gamma H_2O$ ($\alpha > 0$, $\beta > 0$, $\gamma \geq 0$) is still more preferable. More preferable specific examples thereof may include one or more selected from zinc borates represented by $2ZnO \cdot 3B_2O_3 \cdot 3.5H_2O$, $4ZnO \cdot B_2O_3 \cdot H_2O$, and $2ZnO \cdot 3B_2O_3$.

The zinc containing compounds play a role of suppressing occurrence of a gas turned into a fuel by decomposition of a resin by shutting heat from a flame as a heat source to the resin during combustion as a flame-retardant auxiliary agent (heat insulation ability), thereby to form a flameproof layer (or carbonized layer) necessary to enhance flame retardance. These zinc containing compounds may be processed with a surface treating agent such as a silane-based coupling agent and a titanate-based coupling agent.

A preferable content of the zinc containing compound is from 0.1 to 15 parts by mass based on 100 parts by mass of phosphinate salts. The content thereof is more preferably from 1 to 10 parts by mass, and is still more preferably from 2 to 7 parts by mass. From the viewpoint of enhancing stability of the flame retardant, the content of the zinc containing compounds is in the range mentioned above.

In the flame-retardant resin composition of the present embodiment, other than those mentioned above, known organic and inorganic stabilizers can also be used.

Examples of the organic stabilizers may include hindered phenolic antioxidants represented by "IRGANOX 1098" (made by Ciba Japan K.K.) and the like, phosphorus-based processing thermal stabilizers represented by "IRGAFOS 168" (made by Ciba Japan K.K.) and the like, lactone-based processing thermal stabilizers represented by "HP-136" (made by Ciba Japan K.K.), sulfur-based heat-resistant stabilizer, and hindered amine-based light stabilizers. Of these, the hindered phenolic antioxidants and the phosphorus-based processing thermal stabilizers, or a combination thereof is more preferable.

Examples of the inorganic stabilizers may include metal-based stabilizers such as zinc oxide, zinc sulfide, and copper compounds mentioned above.

A preferable blending amount of the stabilizer is from 0.001 to 5 parts by mass based on 100 parts by mass of the thermoplastic resin, and is more preferably from 0.01 to 3 parts by mass.

Various fillers for electric conduction can be used for the flame-retardant resin composition of the present embodiment. Examples thereof may include carbon black for electric conduction, carbon nanotubes (carbon fibrils), graphite, and carbon fibers. These may be used as a mixture of two or more thereof. Of these, carbon black for electric conduction and carbon nanotubes (carbon fibrils) are preferable.

The blending amount of the filler for electric conduction is preferably in the range of from 0.5 to 20% by mass based on 100% by mass of the flame-retardant resin composition. The blending amount is more preferably from 1 to 10% by mass, and is still more preferably from 1 to 5% by mass. Further still more preferably, it is from 1 to 3% by mass.

In the present embodiment, a method for adding a filler for electric conduction is not particularly limited. Examples of a preferable method may include a method for adding a filler for electric conduction in polyamide in a form of a masterbatch for electric conduction molten kneaded in advance. At this time, a preferable blending amount of the filler for electric conduction in the masterbatch is from 5 to 30% by mass based on 100% by mass of the masterbatch for electric conduction. When carbon black for electric conduction is used as the filler for electric conduction, from 5 to 15% by mass is more preferable, and from 8 to 12% by mass is still more preferable.

In the case where a filler for electric conduction other than carbon nanotubes (carbon fibrils), graphite, and carbon black for electric conduction including carbon fibers is used as the filler for electric conduction, the blending amount thereof is preferably from 10 to 30% by mass, and more preferably from 15 to 25% by mass.

A method for producing a masterbatch for electric conduction using a twin screw extruder is preferable as a method for producing a masterbatch for electric conduction. A method for adding a filler for electric conduction in molten polyamide and further melt kneading the mixture is particularly preferable.

In the present embodiment, other than the above-mentioned components, an additional component may be added at an arbitrary stage when necessary in the range not to impair the effect of the present embodiment.

Examples of the additional component may include other thermoplastic resins such as polyesters and polyolefines, plasticizers (e.g., low molecular weight polyolefines, polyethylene glycol, and fatty acid esters), antistatic agents, nucleating agents, fluidity improving agents, fillers, reinforcing agents, various peroxides, spreading agents, copper-based thermal stabilizers, organic thermal stabilizers represented by hindered phenolic oxidization deterioration preventing agent, antioxidants, ultraviolet absorbing agents, and light stabilizers.

Each specific preferable amount of these components to be added is 10% by mass or less in the flame-retardant resin composition. A more preferable amount thereof to be added is less than 5% by mass, and still more preferably 3% by mass or less.

Examples of specific process machinery for obtaining the flame-retardant resin composition of the present embodiment may include single screw extruders, twin screw extruders, rolls, kneaders, Brabender plastograph, and Banbury mixers. Of these, the twin screw extruders are preferable. Particularly, the twin screw extruders provided with an upstream feed opening and one or more downstream feed openings are more preferable.

A method for producing the present embodiment is not particularly limited as long as the effect of the present embodiment is manifested.

A preferable example will be described below:

(1) a method in which using a twin screw extruder, a thermoplastic resin, a phosphinic acid salt, and a basic compound are supplied in batch, and molten kneaded;
(2) a method in which using a twin screw extruder having one feed opening upstream thereof and one feed opening downstream thereof, a thermoplastic resin and a basic compound are supplied from the upstream feed opening and molten kneaded, and a phosphinic acid salt is supplied from the downstream feed opening and further molten kneaded; and
(3) a method in which using a twin screw extruder having one feed opening upstream thereof and one feed opening downstream thereof, a thermoplastic resin is supplied from the upstream feed opening and molten kneaded, and a mixture of a phosphinic acid salt and a basic compound is supplied from the downstream feed opening and further molten kneaded.

A melt kneading temperature in a single screw extruder or a twin or more screw extruder and an injection molding machine (resin temperature of the flame-retardant resin composition during heating process) for obtaining the flame-retardant resin composition of the present embodiment or a molded body thereof is not limited as long as the melt kneading temperature is in the range not to impair the effect of the present embodiment. Preferably, the melt kneading temperature is in the range of from 200 to 360°C. A melt kneading temperature of 360°C or less can suppress deterioration of the thermoplastic resin and is preferable. A melt kneading temperature of 340°C or less is still more preferable.

As the number of rotation of the extruder during processing, from 150 to 800 rpm is preferable and from 250 to 700 rpm is more preferable. Preferably, the number of rotation is 150 rpm or more in order to efficiently enhance dispersibility of phosphinate salts, and is 800 rpm or less in order to suppress decomposition of the resin.

As the flame-retardant resin composition of the present embodiment, those in which the total burning time measured by vertical flame application according to UL94VB in test specimens having thicknesses of 0.8 mm, 1.6 mm, and 3.2 mm is 250 seconds or less can be used suitably for a variety of application. More preferably, according to the same measuring method, the flame-retardant resin composition has flame retardance such that there is no cotton ignition by flaming drops. Still more preferably, the total burning time is 50 seconds or less.

The flame-retardant resin composition of the present embodiment has excellent heat resistance, flame retardance, extrusion processability, and injection molding stability, and has low corrosiveness to a metal and excellent mechanical physical properties and molding processability. Additionally, the flame-retardant resin composition of the present embodiment can be provided for a reflow apparatus that is used in a surface mount technology (SMT) in fields of electric and electronic components. Preferably, the flame-retardant resin composition can be provided for a reflow furnace at the highest temperature of 250°C, and more preferably, can be provided for a reflow furnace at the highest temperature of 260°C.

The flame-retardant resin composition of the present embodiment can be particularly suitably used for electric and electronic components and electric and electronic components for automobiles. Of these, it can be particularly suitably used for components for the surface mount technology (SMT). As the components for the surface mount technology (SMT), it can be particularly suitably used for heat-resistant connectors or jacks. Examples

Next, the present embodiment will be described more in detail according to Examples given below, but the present embodiment will not be limited to the following Examples.

Raw materials and measuring methods used in Examples and Comparative Examples will be shown below.

(Resins used)

(Polyphenylene ethers)

- Polyphenylene ether (PPE-1): Xyron (registered trademark) S201A obtained from Asahi Kasei Chemicals Corporation
Reduced viscosity ηsp/c: 0.51 dL/g

- Polymer polyphenylene ether formed of 2,6-dimethylphenol (PPE-2): Xyron (registered trademark) S202A obtained from Asahi Kasei Chemicals Corporation Reduced viscosity ηsp/c: 0.42 dL/g
  Polymer formed of 2,6-dimethylphenol
- Polyphenylene ether (PPE-3): polyphenylene ether polymerized in accordance with Japanese Patent Publication No. 60-34571
  Reduced viscosity ηsp/c: 0.32 dL/g
  Polymer formed of 2,6-dimethylphenol
- Polyphenylene ether copolymer (PPE-4): a polyphenylene ether copolymer polymerized in accordance with Japanese Patent Application No. 2006-245982
  Reduced viscosity ηsp/c: 0.53 dL/g
  Polymer formed of 2,6-dimethylphenol (75% by mass) and 2,3,6-trimethylphenol (25% by mass)
- Polyphenylene ether denatured by maleic acid anhydride (PPE-5): a maleic acid anhydride denatured polyphenylene ether prepared in accordance with Example of preparation
  Reduced viscosity ηsp/c: 0.43 dL/g

[Example of preparation] <Production of PPE-5>

Based on 100 parts by mass of PPE-2, 2 parts by mass of maleic acid anhydride and 0.3 parts by mass of a radical generator ("PERHEXA 25B": made by NOF CORPORATION) were dry blended. The mixture was supplied to a twin screw extruder having one feed opening upstream thereof [made by ZSK-25: Coperion GmbH (Germany)] in which a cylinder temperature was set at 320°C, and molten kneaded, and pelletized.

Next, 1 g of the obtained pellet was taken, and sandwiched between layers, each layer being formed of a polytetrafluoroethylene sheet, an aluminum sheet, and an iron sheet in order from the inside thereof. Then, compression molding was performed at 100 $kg/cm^2$ using a press molding machine whose temperature was set at 280°C, and a film was obtained.

The obtained film was subjected to infrared spectroscopy measurement using an FT/IR-420 Fourier transform infrared spectrophotometer made by JASCO Corporation.

In measurement to the film, a peak due to maleic acid origin added to polyphenylene ether was observed at 1790 $cm^{-1}$.

An addition proportion of MAH calculated from a calibration curve formula created in advance using a mixture of PPE and MAH was 0.52% by mass.

[Styrene resins]

- Polystyrene block-hydrogenated polybutadiene-polystyrene block (SEBS-1)
  Amount of styrene bonded: 33%,
  Amount of 1,2-vinyl bonds in the polybutadiene portion: 47%,
  Number average molecular weight of polystyrene chains: 29000,
  Hydrogenation proportion of the polybutadiene portion: 99.8%
- Polymer block mainly containing styrene-hydrogenated random copolymer block (SOE) obtained by hydrogenating a random copolymer of styrene and butadiene
  Product made by Asahi Kasei Chemicals Corporation, "S. O. E (registered trademark) L605"

[Polyamides]

- Polyamide 6,6 (PA66)
  Made by Solutia Inc. (U.S.A.), "Vydyne (registered trademark) 48BX"
- Polyamide 9T: aromatic polyamide made of terephthalic acid, nonamethylene diamine, and 2-methyl-1,8-octamethylenediamine (PA9T-1)
  Melting point: 308°C,
  Viscosity number: 150 mL/g
  terminal cap rate: 90%,

Concentration of terminal amino group: 19 μmol/g
It was prepared in accordance with production of polyamide 9T in Example described in WO 2007/058169.

- Polyamide 9T: aromatic polyamide made of terephthalic acid, nonamethylene diamine, and 2-methyl-1,8-octamethylenediamine (PA9T-2)
Melting point: 304°C,
Viscosity number: 210 mL/g,
Terminal cap rate: 90%,
Concentration of terminal amino group: 50 μmol/g
It was prepared in accordance with production of polyamide 9T in Example described in WO 2007/058169.
- Polyamide 6T/66: aromatic polyamide made of hexamethylenediamine, terephthalic acid, and adipic acid (PA6T/66)
Melting point: 314°C
Concentration of terminal amino group: 80 μmol/g
Trade name: "Amodel A-4000 (made by Solvay Advanced Polymers, L. L. C.)"

The melting point of the obtained aromatic polyamide was measured as follows. Using a differential scanning calorimeter (made by PerkinElmer, Inc., trade name: DSC-7), the temperature of a polyamide pellet was raised to 340°C from 40°C at a rate of 50°C/min., and kept for 2 minutes so that the polyamide was sufficiently molten. Subsequently, the temperature was lowered to 40°C at a rate of 20°C/min., and kept for 2 minutes. Then, the temperature was raised at a rate of 20°C/min., and a peak top temperature of an endothermic peak observed at this time was obtained as the melting point.

The viscosity number of aromatic polyamide is a value measured in a 96% sulfuric acid according to ISO 307.

A terminal cap rate of the obtained aromatic polyamide and a concentration of a terminal group thereof were measured as follows. Using $^1$H-NMR (measured at 500 MHz, at 50°C in deuterated trifluoroacetic acid), the number of carboxyl group terminal and that of amino group terminals, and that of capped terminals were each measured from an integral value of a property signal of each terminal group. Then, the terminal cap rate was determined by the following formula.

$$\text{Terminal cap rate (\%)} = [(\alpha-\beta)/\alpha] \times 100$$

wherein $\alpha$ represents the total number of terminal groups in molecular chains, and $\beta$ represents the total number of the remaining uncapped carboxyl group terminals and amino group terminals.

[Polyarylene sulfides]

- Polyphenylene sulfide (PPS-1): crosslinked poly(p-phenylene sulfide)
Melt viscosity: 130 Pa·s (shear rate of 100 seconds$^{-1}$, 300°C),
Amount of oligomer: 0.6% by mass
- Polyphenylene sulfide (PPS-2): half crosslinked poly(p-phenylene sulfide)
Melt viscosity: 140 Pa·s (shear rate of 100 seconds$^{-1}$, 300°C),
Amount of oligomer: 0.5% by mass
- Polyphenylene sulfide (PPS-3): linear poly(p-phenylene sulfide)
Melt viscosity: 110 Pa·s (shear rate of 100 seconds$^{-1}$, 300°C),
Amount of oligomer: 0.3% by mass

[Phosphinic acid metal salt]

Aluminum diethylphosphinate (FR-1): made by Clariant SE, Exolit OP930

[Other flame retardants]

- Melamine polyphosphate (FR-2): made by Nissan Chemical Industries, Ltd., "PHOSMEL-200"

[Basic compounds]

- Calcium hydroxide (CAOH-1): reagent (made by Wako Pure Chemical Industries, Ltd.) Number average particle size: 7.5 μm, JIS special grade slaked lime equivalent, purity of 97%
- Calcium hydroxide (CAOH-2): made by Suzuki Kogyo K.K., fine particulate calcium hydroxide (Karutekku) Number average particle size: 5.0 μm, purity of 99%
- Calcium hydroxide (CAOH-3): made by Suzuki Kogyo K.K., particulate calcium hydroxide (Karutekku LT) Number average particle size: 1.5 μm, purity of 99%
- Calcium oxide (CAO-1): reagent (made by Wako Pure Chemical Industries, Ltd.) Number average particle size: 25 μm, calcined lime JIS grade 2 equivalent
- Calcium oxide (CAO-2): reagent (made by Wako Pure Chemical Industries, Ltd.) Number average particle size: 10 μm, JIS special grade calcined lime equivalent
- Zinc oxide (ZNO): made by Toho Zinc Co., Ltd., "GINREI A-1" Number average particle size: 0.2 μm
- Aluminum hydroxide (ALOH): reagent (made by Wako Pure Chemical Industries, Ltd.) Number average particle size: 1.0 μm
- Magnesium oxide (MGO): made by Kyowa Chemical Industry Co., Ltd., "Pyrokisuma (registered trademark) 5Q" Number average particle size: 1.3 μm
- Aluminum oxide (ALO): reagent (made by Wako Pure Chemical Industries, Ltd.) Number average particle size: 1.2 μm
- Hydrotalcite (DHT): made by Kyowa Chemical Industry Co., Ltd., "DHT-4A" Number average particle size: 4 μm

[Inorganic fillers]

- Chopped glass fiber (GF): made by Nippon Electric Glass Co., Ltd., "ECSO3-T747H" fiber diameter; 10 μm
- Talc (Talc): made by Hayashi-Kasei Co., Ltd., "TALCAN PAWDER PK-C"

[Compatibilizing agents]

- Maleic acid anhydride (MAH): made by NOF CORPORATION, "CRYSTAL MAN-AB"
- Citric acid (CA): reagent (made by Wako Pure Chemical Industries, Ltd.)
- Styrene/glycidyl methacrylate copolymer (SG-C) Content of glycidyl methacrylate = 5% by mass Weight average molecular weight: 110,000

[Method of measurement]

(1) Flame retardance (UL-94VB)

Per one sample, measurement was performed on 5 pieces using the method according to UL94 (specification defined by Underwriters Laboratories Inc., U.S.A.). Test specimens (a length of 127 mm, a width of 12.7 mm, a thickness of 0.8 mm, 1.6 mm, or 3.2 mm) were molded using an injection molding machine (made by Toshiba Machine Co., Ltd., IS-80EPN). The temperatures at the time of molding were each shown in Tables 1 to 9.

Flame-retardant classes into which the test specimens were classified according to the UL94 vertical burning test were shown in flame-retardant ranking. However, in each sample, the test was performed 5 times, and determination was made. An outline of the classifying method is as follows. Other details are according to the UL94 standard.

V-0: the total burning time is 50 seconds or less, the maximum burning time per one is 10 seconds or less, and no flaming drops;

V-1: the total burning time is 250 seconds or less, the maximum burning time per one time is 30 seconds or less,

and no flaming drops;
V-2: the total burning time is 250 seconds or less, the maximum burning time per one time is 30 seconds or less, and flaming drops; and

Nonconforming: samples that fall into none of the above-mentioned three rankings, and samples that cause even the clamp holding the test specimen to burn.
The total burning time (second) is a total burning time from application of a flame to ceasing of burning in a total of 10 times of application of the flame performed on 5 test specimens per sample twice. The maximum burning time (second) designates the longest time until the burning ceases.

(2) Measurement of physical properties

The obtained flame-retardant resin composition pellet was molded into an ISO multiple-purpose test specimen having a thickness of 4.0 mm using an injection molding machine (made by Toshiba Machine Co., Ltd.: IS-80EPN). The temperatures at the time of molding were each shown in Tables 1 to 9. Flexural strength (FS) and flexural modulus (FM) were measured according to ISO 178, and tensile strength (TS) and tensile elongation at break (EL) were measured according to ISO 527/1/2. A Charpy impact test with a notch was conducted according to ISO 179/1eA. Load deflection temperature at a load of 0.45 MPa and that at a load of 1.80 MPa were measured according to ISO 75.

(3) Corrosion test

Into an autoclave made of SUS314 and having a resisting pressure 2.0 MPa and a volume 100 mL, 20 g of the obtained pellets was placed, and a carbon steel test specimen (material: SS400) whose size was 10 mm long × 20 mm wide × 2.0 mm thick and whose surface was polished at #2000 was placed. Then, additional 20 g of the pellets was placed into the autoclave to bury the carbon steel test specimen. The inside of the autoclave was subjected to replacement by nitrogen. Then, the autoclave was sealed, and left as it was in a constant temperature bath set at 330°C for 5 hours. The autoclave was taken out under running water, cooled to room temperature, and opened.
The carbon steel test specimen was taken out from the pellet molten and solidified, and the resin adhering to the carbon steel test specimen was dissolved and removed using HFIP (hexafluoro isopropanol) and heated toluene properly.
In the case of a thermoplastic resin such as PPS that is difficult to be dissolved and removed with a solvent, the resin was heated for 60 minutes in a 700°C heating furnace to be thermally decomposed, and cooled, followed by ultrasonic cleaning in distilled water to remove the adhering substance. An increase in a weight by oxidization of the carbon steel test specimen by thermal decomposition was taken as reference by using an unexamined carbon steel test specimen and heating the unexamined carbon steel test specimen on the same conditions.
The carbon steel test specimen was dried, and weighed down to units of 0.01 mg. The obtained value was divided by the weight of the carbon steel test specimen before the corrosion test, which was measured in advance, and a percentage of weight loss before and after the test was determined in mass ppm.

(4) Reflow test

The same test specimen molded for the burning test was produced, and made to absorb moisture at 23°C and a relative humidity of 50% for 168 hours. Then, the test specimen was passed through a reflow furnace set so that the text piece might be heated for 10 seconds on each temperature condition. Change of the test specimen under the reflow environment was observed, and the highest temperature at which no swelling was produced on the test specimen surface was measured.
Test specimens that cannot survive the heating condition at 250°C are difficult to be provided for high temperature reflow furnace using lead-free soldering.

(5) Extrusion processability

A state when a composition was produced with a twin screw extruder was observed and evaluated.

○ : The case where there is no defect.
Δ : Defects were written under each Table.
×: Defects were written under each Table.
××: Defects were written under each Table.

(6) Injection molding stability

Using an injection molding machine (made by Sodick Plustech Co., Ltd.: TR05EH2, mold clamping pressure of 5 tons), the obtained pellets were molded under molding temperature conditions shown in Tables 1 to 9, respectively, at an injection rate of 300 mm/sec using an FPC connector (length of 30 mm, width of 1 mm, two-cavity, 50 pin holes, pin hole pitch: 0.5 mm pitch) metal mold. The average injection pressure of first ten shots and the average injection pressure of the 100th to 109th shots were compared, and injection molding stability was evaluated.
In the case where the injection pressure is increased, defects such that the metal mold is not filled may be produced if molding is continued.
In the case where the injection pressure is reduced, it causes reduction in physical properties due to decomposition of the resin or occurrence of defects due to production of burr.

(7) Gloss of surface of molded piece

Using an injection molding machine (made by Toshiba Machine Co., Ltd.: IS-80EPN), a flat test specimen having a thickness of 2.7 mm and a size of 100 mm × 100 mm was molded on conditions of a injection pressure and rate at which a filling time was 1 second and on conditions of the respective molding temperatures shown in Tables 1 to 9.
Using a glossmeter made by HORIBA, Ltd., glossiness was measured with a light source having an incident angle of 20° at a total of five points of a center of the obtained molded piece and points 3 cm inside from the four corners on the diagonal lines.
Glosssiness is better at a higher value.

(8) Presence/absence of occurrence of die drool due to film molding

Using a twin screw extrusion film molding machine (made by TECHNOVEL CORPORATION, "KZW15TW-25MG-NH," screw diameter of 15 mm), extrusion film molding was performed on the obtained pellet at a cylinder temperature of 220°C using a T dice having a width of 150 mm, a first roll (material: heat-resistant rubber roll) set at 40°C, and a second roll (material: metallic roll) set at 90°C. The thickness was adjusted at 400 μm.
By molding the above-mentioned sheet and observing brown to black objects accumulated in a dice lip, a state of production of the die drool was determined based on the following decision criteria:

○ : the die drool was not observed at all even if molding continues for 1.5 hours or more; and
×: the die drool was observed before 1.5 hours had passed.

(9) Flame retardance of sheet (UL-94 VTM)

The test was performed on five pieces per sample using the method of UL94 (specification defined by Underwriters Laboratories Inc., U.S.A.). A test specimen was prepared by cylindrically rolling a film test specimen (200 ± 5 × 50 ± 1 × 0.4 mm), and was mounted vertical to a clamp. A 20-mm flame was applied to the test specimen for 3 seconds twice, and the test specimen was determined as VTM-0, VTM-1, VTM-2, or Not (out of specification) based on the burning behavior of the test specimen.

VTM-0: total burning time of 50 seconds or less, maximum burning time of 10 seconds or less per test specimen, and no flaming particle drops;
VTM-1: total burning time of 250 seconds or less, maximum burning time of 30 second or less per test specimen, and no flaming particle drops;
VTM-2: total burning time of 250 seconds or less, maximum burning time of 30 seconds or less per test specimen, and flaming particles drop; and
Out of specification: samples that fall into none of the above-mentioned three rankings, and samples that cause even the clamp holding the test specimen to burn.

[Examples and Comparative Examples]

A twin screw extruder [ZSK-26MC: made by Coperion GmbH (Germany)] having one feed opening upstream thereof and two feed openings downstream thereof (when the full length of an extruder cylinder was 1.0, one feed opening was at a position of 0.4 and the other was at a position of 0.8) were used. A cylinder temperature was set at temperatures shown in each Table as a temperature from the feed opening upstream thereof (hereinafter, upstream feed opening) to that at the position of L = 0.4 (hereinafter, central feed opening) and a temperature from the central

feed opening to that downstream thereof.

According to the proportion described in Tables 1 to 9, each raw material was supplied and molten kneaded, and a pellet was obtained. In order to adjust the moisture content of the obtained pellet, the pellet was extruded, and dried with a dehumidifying dryer set at 80°C, and subsequently placed into a dampproof bag coated with aluminum coat. The moisture content of the pellet at this time was approximately 250 to 500 ppm.

The number of rotation of the screw at this time was 250 revolutions per minute, and the amount of discharge was 15 kg/h. Moreover, openings were provided in a block immediately before cylinder block having the central feed opening and in a cylinder block immediately before the die, respectively, and a residual volatile substance and an oligomer were removed by vacuum suction. The degree of vacuum (absolute pressure) at this time was 60 Torr.

The above-mentioned various evaluations were performed using the obtained pellet. Table 1 to 9 shows results along with the composition.

[Table 1]

| Kind of resin composition | | | | PA66/GF | | | | | | | | |
|---|---|---|---|---|---|---|---|---|---|---|---|---|
| No. | | | | Example | | | | | Comparative Example | | | |
| | | | | 1 | 2 | 3 | 4 | 5 | 1 | 2 | 3 | 4 |
| Blending | Upstream feed opening | | | | | | | | | | | |
| | PA66 | | Parts by mass | 100 | 100 | 100 | 100 | 100 | 100 | 100 | 100 | 100 |
| | Downstream first feed opening | | | | | | | | | | | |
| | GF | | Parts by mass | 61 | 61 | 61 | 61 | 61 | 61 | 61 | 61 | 61 |
| | FR-1 | | Parts by mass | 20 | 20 | 20 | 20 | 20 | 20 | 20 | 20 | 20 |
| | FR-2 | | Parts by mass | 10 | 10 | 10 | 10 | 10 | 10 | 10 | 10 | 10 |
| | CAOH-1 | | Parts by mass | 0.04 | 1 | 2 | | | | | | |
| | MGO | | Parts by mass | | | | 0.04 | 2 | | 2.5 | 4 | 10 |
| | Total | | Parts by mass | 191.04 | 192 | 193 | 191.4 | 193 | 191 | 193.5 | 195 | 201 |
| | Amount of basic compound based on flame retardant | | Parts by mass | 0.2 | 5.0 | 10.0 | 0.2 | 10.0 | 0.0 | 12.5 | 0.0 | 50.0 |
| Process | Extruder barrel temperature | Prior stage | °C | 280 | | | | | 280 | | | |
| | | Subsequent stage | °C | | | | | | | | | |
| | Molding temperature | Cylinder temperature | °C | 290 | | | | | 290 | | | |
| | | Metal mold temperature | °C | 80 | | | | | 80 | | | |
| Extrusion processability | | | | ○ | ○ | Δ | ○ | ○ | Δ | × | × | ×× |
| Injection molding stability | | Fluctuation of injection pressure | MPa | ±4 | ±2 | ±6 | ±2 | ±3 | ±3 | -18 | -14 | -35 |
| Evaluation | UL-94 VB TEST 0.8 mmt | Ranking | | V-0 | V-0 | V-0 | V-0 | V-0 | V-0 | V-0 | V-0 | V-1 |
| | Reflow resistance (low temperature) | Highest temperature without swelling | °C | 240 | 235 | 235 | 235 | 235 | 240 | 225 | 225 | 215 |
| | Corrosion test | Weight loss | Mass ppm | 510 | 230 | 92 | 97 | 97 | 1050 | 88 | 88 | 67 |

Δ : There is strand breakage during extrusion.
×: Strand breakage frequently occurs during extrusion.
××: Strand breakage frequently occurs so that extrusion is difficult.

Examples 1 to 5 had high flame retardance, sufficiently low corrosiveness, and high stability at the time of injection molding. Comparative Example 1 had high corrosiveness while there was no problem in flame retardance and reflow resistance at a low temperature. Comparative Examples 2 and 3 were inferior in extrusion processability and injection molding stability while there was no problem in flame retardance and corrosiveness. Comparative Example 4 was inferior in flame retardance, and also strand breakage frequently occurred during extrusion so that it was difficult to obtain a pellet for evaluation. Injection molding stability was also very poor.

[Table 2]

| Kind of resin composition | | | PA9T/GF and PA6/66/GF | | | | | | | | | |
|---|---|---|---|---|---|---|---|---|---|---|---|---|
| No. | | | Example | | | | | Comparative Example | | | | |
| | | | 6 | 7 | 8 | 9 | 10 | 5 | 6 | 7 | 8 | 9 |
| Blending | Upstream feed opening Upstream feed opening | | | | | | | | | | | |
| | PA9T-1 | Parts by mass | 100 | 100 | 100 | 100 | | 100 | | 100 | 100 | |
| | PA6T/66 | Parts by mass | | | | | 100 | | 100 | | | 100 |
| | Downstream first feed opening | | | | | | | | | | | |
| | GF | Parts by mass | 64 | 64 | 64 | 64 | 64 | 64 | 64 | 64 | 64 | 64 |
| | FR-1 | Parts by mass | 45 | 45 | 45 | 45 | 45 | 45 | 45 | 45 | 45 | 45 |
| | Talc | Parts by mass | 1 | 1 | 1 | 1 | 1 | 1 | 1 | 1 | 1 | 1 |
| | CAOH-1 | Parts by mass | 2 | | | | | | | 5 | | 5 |
| | CAOH-3 | Parts by mass | | 0.05 | 2 | 4.5 | 2 | | | | 5 | |
| | Total | Parts by mass | 212 | 210.05 | 212 | 214.5 | 212 | 210 | 210 | 215 | 215 | 215 |
| | Amount of basic compound based on flame retardant | Parts by mass | 4.4 | 0.1 | 4.4 | 10.0 | 4.4 | 0.0 | 0.0 | 11.1 | 11.1 | 11.1 |

(continued)

| Kind of resin composition | | | | PA9T/GF and PA6/66/GF | | | | | | | | | |
|---|---|---|---|---|---|---|---|---|---|---|---|---|---|
| No. | | | | Example | | | | | Comparative Example | | | | |
| | | | | 6 | 7 | 8 | 9 | 10 | 5 | 6 | 7 | 8 | 9 |
| Process | Extruder barrel temperature | Prior stage | °C | 320 | | | | | | | | | |
| | | Subsequent stage | °C | 300 | | | | | | | | | |
| | Molding temperature | Cylinder temperature | °C | 330 | | | | | | | | | |
| | | Metal mold temperature | °C | 120 | | | | | | | | | |
| Extrusion processability | | | | ○ | ○ | ○ | Δ | ○ | Δ | Δ | ×× | ×× | ×× |
| Injection molding stability | | Fluctuation of injection pressure injection pressure | MPa | ±2 | ±2 | ±2 | ±5 | ±5 | +4 | +8 | -14 | -15 | -30 |
| Evaluation | Deflection temperature under load | 0.45 MPa Load<br>1.8 MPa Load | °C<br>°C | 307<br>297 | 305<br>295 | 305<br>296 | 304<br>295 | 316<br>299 | 309<br>299 | 318<br>301 | 296<br>283 | 297<br>283 | 303<br>284 |
| | VB TEST 0.8 mmt UL-94 VB TEST 0.8 mmt | Ranking | | V-0 | V-0 | V-0 | V-0 | V-0 | V-0 | V-0 | V-1 | V-1 | V-1 |
| | Reflow resistance | Highest temperature without swelling °C | | 260 | 270 | 260 | 255 | 250 | 270 | 255 | 230 | 230 | 230 |
| | Corrosion test | Weight loss | Mass ppm | 350 | 750 | 230 | 110 | 270 | 4860 | 6950 | 92 | 84 | 135 |

Δ : There is strand breakage during extrusion.
××: Strand breakage frequently occurs so that extrusion is difficult.

Examples 6 to 10 had high flame retardance, sufficiently low corrosiveness, and high stability at the time of injection molding. Comparative Examples 5 and 6 had very high corrosiveness. Comparative Examples 7 to 9 were inferior in extrusion processability and injection molding stability while there was no problem in corrosiveness. Heat resistance in the reflow test after water absorption was remarkably reduced.

[Table 3]

| Kind of resin composition | | | PA9T/PPE and PA6T/66/PPE, PA9T/PA66/PPE | | | | | | | | | | | | | |
|---|---|---|---|---|---|---|---|---|---|---|---|---|---|---|---|---|
| No. | | | Example | | | | | | | | | Comparative Example | | | | |
| | | | 11 | 12 | 13 | 14 | 15 | 16 | 17 | 18 | 19 | 10 | 11 | 12 | 13 | 14 |
| Blending | Upstream feed opening | | | | | | | | | | | | | | | |
| | PPE-2 | Parts by mass | 30 | 30 | 50 | 30 | 10 | 30 | 30 | 30 | 30 | 30 | 30 | 30 | 30 | 30 |
| | MAH | Parts by mass | 0.3 | 0.3 | 0.5 | 0.3 | 0.1 | 0.3 | 0.3 | 0.3 | 0.3 | 0.3 | 0.3 | 0.3 | 0.3 | 0.3 |
| | Downstream first feed opening | | | | | | | | | | | | | | | |
| | PA9T-1 | Parts by mass | 70 | 70 | 50 | 70 | 90 | 70 | 70 | | 60 | 70 | | 60 | 70 | |
| | PA6T/66 | Parts by mass | | | | | | | | 70 | | | 70 | | | 70 |
| | PA66 | Parts by mass | | | | | | | | | 10 | | | 10 | | |
| | Downstream second feed opening | | | | | | | | | | | | | | | |
| | FR-1 | Parts by mass | 10 | 10 | 10 | 10 | 10 | 10 | 10 | 10 | 10 | 10 | 10 | 10 | 10 | 10 |
| | Talc | Parts by mass | 1 | 1 | 1 | 1 | 1 | 1 | 1 | 1 | 1 | 1 | 1 | 1 | 1 | 1 |
| | CAOH-2 | Parts by mass | 0.02 | 0.1 | 0.2 | 0.2 | 0.2 | 0.5 | 1 | 0.2 | 0.2 | | | | 1.2 | 1.2 |

(continued)

| Kind of resin composition | | | | PA9T/PPE and PA6T/66/PPE, PA9T/PA66/PPE | | | | | | | | | | | | | |
|---|---|---|---|---|---|---|---|---|---|---|---|---|---|---|---|---|---|
| No. | | | | Example | | | | | | | | | Comparative Example | | | | |
| | | | | 11 | 12 | 13 | 14 | 15 | 16 | 17 | 18 | 19 | 10 | 11 | 12 | 13 | 14 |
| | Total | | Parts by mass | 111.32 | 111.4 | 111.7 | 111.5 | 111.3 | 111.8 | 112.3 | 111.5 | 111.5 | 111.3 | 111.3 | 111.3 | 112.5 | 112.5 |
| | Amount of basic compound based on flame retardant | | Parts by mass | 0.2 | 1.0 | 2.0 | 2.0 | 2.0 | 5.0 | 10.0 | 2.0 | 2.0 | 0.0 | 0.0 | 0.0 | 12.0 | 12.0 |
| Process | Extruder barrel temperature | Prior stage | °C | 320 | | | | | | | | | | | | | |
| | | Subsequent stage | °C | 300 | | | | | | | | | | | | | |
| | Molding temperature | Cylinder temperature | °C | 330 | | | | | | | | | | | | | |
| | | Metal mold temperature | °C | 120 | | | | | | | | | | | | | |
| Extrusion processability | | | | ○ | ○ | ○ | ○ | ○ | ○ | Δ | ○ | ○ | Δ | Δ | Δ | ×× | ×× |
| Injection molding stability | | Fluctuation of injection pressure | MPa | ±2 | ±2 | ±2 | ±2 | ±3 | ±3 | ±6 | ±4 | ±4 | -4 | -4 | -12 | -15 | -33 |
| Physical properties | UL-94 VB TEST 0.8 mmt | Ranking | | V-0 | V-0 | V-0 | V-0 | V-0 | V-0 | V-0 | V-0 | V-0 | V-0 | V-0 | V-0 | V-1 | V-1 |
| | Reflow resistance | Highest temperature without swelling °C | | 250 | 250 | 250 | 250 | 250 | 250 | 245 | 250 | 250 | 250 | 250 | 240 | 220 | 215 |
| | Corrosion test | Weight loss | Mass ppm | 780 | 267 | 122 | 101 | 95 | 90 | 80 | 96 | 35 | 2400 | 2600 | 1800 | 170 | 110 |

Δ : There is strand breakage during extrusion.
xx: Strand breakage frequently occurs so that extrusion is difficult.

Examples 11 to 19 had high flame retardance, sufficiently low corrosiveness, and high stability at the time of injection molding. Comparative Examples 10 to 12 had very high corrosiveness. Comparative Examples 13 and 14 were inferior in extrusion processability and injection molding stability while there was no problem in corrosiveness. Heat resistance after water absorption in the reflow test was remarkably reduced.

[Table 4]

| Kind of resin composition | | | PA9T/PPE/GF, PA6T/66/PPE/GF | | | | | | | | | | | | |
|---|---|---|---|---|---|---|---|---|---|---|---|---|---|---|---|
| No. | | | Example | | | | | | | | | | | | |
| | | | 20 | 21 | 22 | 23 | 24 | 25 | 26 | 27 | 28 | 29 | 30 | 31 | 32 |
| Blending | Upstream feed opening | | | | | | | | | | | | | | |
| | PPE-2 | Parts by mass | 30 | 30 | 30 | 50 | 30 | 30 | 30 | 30 | 30 | 10 | 30 | 30 | 30 |
| | MAH | Parts by mass | 0.3 | 0.3 | 0.3 | 0.5 | 0.3 | 0.3 | 0.3 | 0.3 | 0.3 | 0.1 | 0.3 | 0.3 | 0.3 |
| | Downstream first feed opening | | | | | | | | | | | | | | |
| | PA9T-1 | Parts by mass | 70 | 70 | 70 | 50 | 70 | 70 | 70 | 70 | 70 | 90 | 70 | 70 | |
| | PA6T/66 | Parts by mass | | | | | | | | | | | | | 70 |
| | Downstream second feed opening | | | | | | | | | | | | | | |
| | GF | Parts by mass | 54 | 54 | 54 | 54 | 54 | 54 | 54 | 54 | 54 | 54 | 54 | 54 | 54 |
| | FR-1 | Parts by mass | 25 | 25 | 25 | 25 | 25 | 25 | 25 | 25 | 25 | 25 | 25 | 25 | 25 |
| | Talc | Parts by mass | 1 | 1 | 1 | 1 | 1 | 1 | 1 | 1 | 1 | 1 | 1 | 1 | 1 |
| | CAOH-1 | Parts by mass | 0.05 | 0.1 | 0.2 | 0.5 | 0.5 | | | | | 0.5 | 1.25 | 2.5 | 0.5 |
| | CAOH-2 | Parts by mass | | | | | | 0.5 | | | | | | | |
| | CAOH-3 | Parts by mass | | | | | | | 0.5 | | | | | | |
| | CAO-1 | Parts by mass | | | | | | | | 0.5 | | | | | |
| | CAO-2 | Parts by mass | | | | | | | | | 0.5 | | | | |
| | Total | Parts by mass | 180.35 | 180.4 | 180.5 | 181 | 180.8 | 180.8 | 180.8 | 180.3 | 180.3 | 180.6 | 181.55 | 182.8 | 180.8 |

| | | | | | | | | | | | | | | | | |
|---|---|---|---|---|---|---|---|---|---|---|---|---|---|---|---|---|
| | Amount of basic compound based on flame retardant | | Parts by mass | 0.2 | 0.4 | 0.8 | 2 | 2 | 2 | 2 | 2 | 2 | 2 | 5 | 10 | 2 |
| Process | Extruder barrel temperature | Prior stage | °C | 320 | | | | | | | | | | | | |
| | | Subsequent stage | °C | 300 | | | | | | | | | | | | |
| | Molding temperature | Cylinder temperature | °C | 330 | | | | | | | | | | | | |
| | | Metal mold temperature | °C | 120 | | | | | | | | | | | | |
| Extrusion processability | | | | ○ | ○ | ○ | ○ | ○ | ○ | ○ | △ | ○ | ○ | ○ | ○ | ○ |
| Injection molding stability | | Fluctuation of injection pressure | MPa | ±1 | ±1 | ±1 | ±1 | ±1 | ±1 | ±0.5 | ±9 | ±4 | ±1 | ±2 | ±5 | ±4 |
| Physical properties | Tensile strength | | MPa | 126 | 123 | 123 | 115 | 119 | 120 | 121 | 121 | 121 | 123 | 117 | 112 | 119 |
| | Tensile breakage distortion | | % | 2.5 | 2.3 | 2.3 | 2.2 | 2.3 | 2.4 | 2.5 | 2.5 | 2.5 | 2.4 | 2.3 | 2.1 | 2.3 |
| | Flexural strength | | MPa | 185 | 184 | 184 | 168 | 172 | 176 | 178 | 178 | 178 | 180 | 165 | 160 | 173 |
| | Flexural modulus | | MPa | 9040 | 9060 | 9060 | 8500 | 8640 | 8720 | 8730 | 8730 | 8730 | 8900 | 8370 | 8250 | 8640 |
| | Charpy impact strength | 23°C | $kJ/m^2$ | 8.0 | 8.2 | 8.2 | 8.1 | 8.4 | 8.3 | 8.9 | 8.9 | 8.9 | 8.6 | 7.9 | 7.2 | 8.3 |
| | | -30°C | $kJ/m^2$ | 8.0 | 8.0 | 8.0 | 8.0 | 8.0 | 8.1 | 8.2 | 8.2 | 8.2 | 8.0 | 7.4 | 7.0 | 8.0 |
| | Deflection temperature under load | 0.45 MPa Load | °C | 305 | 304 | 300 | 290 | 296 | 297 | 298 | 298 | 298 | 303 | 295 | 293 | 294 |
| | | 1.8 MPa Load | °C | 263 | 262 | 261 | 259 | 256 | 256 | 258 | 258 | 258 | 252 | 250.4 | 247 | 256 |
| | UL-94 VB TEST 0.8 mmt | Ranking | | V-0 | V-0 | V-0 | V-0 | V-0 | V-0 | V-0 | V-0 | V-0 | V-0 | V-0 | V-0 | V-0 |
| | | Total burning time | Seconds | 3.1 | 2.9 | 30 | 28 | 33 | 3.1 | 3 | 4.6 | 4.3 | 44 | 42 | 47 | 36 |
| | | Maximum burning time | Seconds | 4.6 | 4.8 | 4.6 | 3.7 | 5.2 | 4.7 | 4.4 | 8.9 | 6.5 | 6.8 | 6.7 | 8.9 | 7.2 |
| | Reflow resistance | Highest temperature without swelling °C | | 270 | 270 | 270 | 270 | 265 | 270 | 270 | 260 | 265 | 265 | 265 | 250 | 250 |
| | Corrosion test | Weight loss | Mass ppm | 964 | 820 | 525 | 210 | 175 | 135 | 100 | 710 | 210 | 154 | 140 | 130 | 168 |

△ : There is strand breakage during extrusion.

×: Strand breakage frequently occurs during extrusion.

[Table 5]

| Kind of resin composition | | | | PA9T/PPE/GF | | | |
|---|---|---|---|---|---|---|---|
| No. | | | | Example | | | |
| | | | | 33 | 34 | 35 | 36 |
| Composition | Upstream feed opening | | | | | | |
| | PPE-2 | | Parts by mass | 30 | 30 | 30 | 30 |
| | MAH | | Parts by mass | 0.3 | 0.3 | 0.3 | 0.3 |
| | Downstream first feed opening | | | | | | |
| | PA9T-1 | | Parts by mass | 70 | 70 | 70 | 70 |
| | Downstream second feed opening | | | | | | |
| | GF | | Parts by mass | 54 | 54 | 54 | 54 |
| | FR-1 | | Parts by mass | 25 | 25 | 25 | 25 |
| | Talc | | Parts by mass | 1 | 1 | 1 | 1 |
| | ZNO | | Parts by mass | 0.5 | | | |
| | ALOH | | Parts by mass | | 0.5 | | |
| | MGO | | Parts by mass | | | 0.5 | |
| | DHT | | Parts by mass | | | | 0.5 |
| | Total | | Parts by mass | 180.3 | 180.3 | 180.3 | 180.3 |
| | Amount of basic compound based on flame retardant | | Parts by mass | 2 | 2 | 2 | 2 |
| Process | Extruder barrel temperature | Prior stage | °C | 320 | | | |
| | | Subsequent stage | °C | 300 | | | |
| | Molding temperature | Cylinder temperature | °C | 330 | | | |
| | | Metal mold temperature | °C | 120 | | | |
| Extrusion processability | | | | ○ | Δ | ○ | ○ |
| Injection molding stability | | Fluctuation of injection pressure | MPa | ±2 | ±7 | ±6 | ±8 |
| Physical properties | Tensile strength | | MPa | 121 | 121 | 121 | 121 |
| | Tensile breakage distortion | | % | 2.5 | 2.5 | 2.5 | 2.5 |
| | Flexural strength | | MPa | 178 | 178 | 178 | 178 |

(continued)

| Kind of resin composition | | | | PA9T/PPE/GF | | | |
|---|---|---|---|---|---|---|---|
| No. | | | | Example | | | |
| | | | | 33 | 34 | 35 | 36 |
| | Flexural modulus | | MPa | 8730 | 8730 | 8730 | 8730 |
| | Charpy impact strength | 23°C | kJ/$m^2$ | 8.9 | 8.9 | 8.9 | 8.9 |
| | | -30°C | kJ/$m^2$ | 8.2 | 8.2 | 8.2 | 8.2 |
| | Deflection temperature under load | 0.45 MPa Load | °C | 298 | 298 | 298 | 298 |
| | | 1.8 MPa Load | °C | 258 | 258 | 258 | 258 |
| | UL-94 VB TEST 0.8 mmt | Ranking | | V-0 | V-0 | V-0 | V-0 |
| | | Total burning time | Seconds | 4.2 | 3.9 | 4.7 | 4.6 |
| | | Maximum burning time | Seconds | 7.4 | 6.7 | 8.9 | 8.3 |
| | Reflow resistance | Highest temperature without swelling °C | | 270 | 250 | 250 | 250 |
| | Corrosion test | Weight loss | Mass ppm | 780 | 820 | 860 | 450 |
| Δ : There is strand breakage during extrusion. | | | | | | | |

[Table 6]

| Kind of resin composition | | | PA9T/PPE/GF, PA6T/66/PPE/GF | | | |
|---|---|---|---|---|---|---|
| No. | | | Comparative Example | | | |
| | | | 15 | 16 | 17 | 18 |
| Composition | Upstream feed opening | | | | | |
| | PPE-2 | Parts by mass | 30 | 30 | 30 | 30 |
| | MAH | Parts by mass | 0.3 | 0.3 | 0.3 | 0.3 |
| | Downstream first feed opening | | | | | |
| | PA9T-1 | Parts by mass | 70 | | 70 | |
| | PA6T/66 | Parts by mass | | 70 | | 70 |
| | Downstream second feed opening | | | | | |
| | GF | Parts by mass | 54 | 54 | 54 | 54 |
| | FR-1 | Parts by mass | 25 | 25 | 25 | 25 |
| | Talc | Parts by mass | 1 | 1 | 1 | 1 |
| | CAOH-1 | Parts by mass | | | 3 | 3 |

(continued)

| Kind of resin composition | | | | PA9T/PPE/GF, PA6T/66/PPE/GF | | | |
|---|---|---|---|---|---|---|---|
| No. | | | | Comparative Example | | | |
| | | | | 15 | 16 | 17 | 18 |
| | Total | | Parts by mass | 180.3 | 180.3 | 183.3 | 183.3 |
| | Amount of basic compound based on flame retardant | | Parts by mass | 0 | 0 | 12 | 12 |
| Process | Extruder barrel temperature | Prior stage | °C | 320 | | | |
| | | Subsequent stage | °C | 300 | | | |
| | Molding temperature | Cylinder temperature | °C | 330 | | | |
| | | Metal mold temperature | °C | 120 | | | |
| Extrusion processability | | | | Δ | Δ | × | × |
| Injection molding stability | | Fluctuation of injection pressure | MPa | +10 | +12 | -15 | -40 |
| Physical properties | Tensile strength | | MPa | 124 | 124 | 99 | 98 |
| | Tensile breakage distortion | | % | 2.3 | 2.3 | 1.8 | 1.8 |
| | Flexural strength | | MPa | 187 | 188 | 150 | 147 |
| | Flexural modulus | | MPa | 8900 | 8940 | 8200 | 8100 |
| | Charpy impact strength | 23°C | $kJ/m^2$ | 8.9 | 8.9 | 6.5 | 6.5 |
| | | -30°C | $kJ/m^2$ | 9.1 | 9.1 | 6.4 | 6.4 |
| | Deflection temperature under load | 0.45 MPa Load | °C | 305 | 305 | 287 | 286 |
| | | 1.8 MPa Load | °C | 263 | 265 | 246 | 246 |
| | UL-94 VB TEST 0.8 mmt | Ranking | | V-0 | V-0 | V-1 | V-1 |
| | | Total burning time | Seconds | 30 | 39 | 62 | 65 |
| | | Maximum burning time | Seconds | 5.8 | 5.5 | 19 | 21 |
| | Reflow resistance | Highest temperature without swelling °C | | 270 | 255 | 240 | 230 |
| | Corrosion test | Weight loss | Mass ppm | 3850 | 3320 | 120 | 155 |

Δ : There is strand breakage during extrusion.
×: Strand breakage frequently occurs during extrusion.

Examples 20 to 36 had high flame retardance, sufficiently low corrosiveness, high thermal resistance in the reflow test, and high stability at the time of injection molding. Particularly, focusing attention on Examples 27 and 28, it was shown that corrosiveness was significantly suppressed at a number average particle size of the basic compound of less than 25 μm.

It was shown that only in the specific range of the blending amount, these Examples excelled Comparative Examples 15 to 18 in all of suppression of corrosion, reflow resistance, flame retardance, extrusion processability, and molding stability.

[Table 7]

| Kind of resin composition | | | | PA9T/PPE/GF | | | | |
|---|---|---|---|---|---|---|---|---|
| No. | | | | Example | | | | |
| | | | | 37 | 38 | 39 | 40 | 41 |
| Blending | Upstream feed opening | | | | | | | |
| | PPE-2 | | Parts by mass | 30 | 30 | 15 | | |
| | PPE-5 | | Parts by mass | | | 15 | | |
| | PPE-3 | | Parts by mass | | | | 30 | 30 |
| | MAH | | Parts by mass | | | | 0.1 | 0.1 |
| | CA | | Parts by mass | 0.8 | 0.8 | | | |
| | Downstream first feed opening | | | | | | | |
| | PA9T-1 | | Parts by mass | 70 | | 70 | 70 | 70 |
| | PA9T-2 | | Parts by mass | | 70 | | | |
| | Downstream second feed opening | | | | | | | |
| | GF | | Parts by mass | 54 | 54 | 54 | 54 | 54 |
| | FR-1 | | Parts by mass | 25 | 25 | 25 | 25 | 25 |
| | Talc | | Parts by mass | 1 | 1 | 1 | 1 | 1 |
| | CAOH-1 | | Parts by mass | 1.25 | 1.25 | 1.25 | | |
| | CAOH-2 | | Parts by mass | | | | 0.5 | 1.25 |
| | Total | | Parts by mass | 182.05 | 182.05 | 181.25 | 180.6 | 181.35 |
| | Amount of basic compound based on flame retardant | | Parts by mass | 5 | 5 | 5 | 2 | 5 |
| Process | Extruder barrel temperature | Prior stage | °C | 320 | | | | |
| | | Subsequent stage | °C | 300 | | | | |
| | Molding temperature | Cylinder temperature | °C | 330 | | | | |
| | | Metal mold temperature | °C | 120 | | | | |
| Extrusion processability | | | | ○ | ○ | ○ | ○ | ○ |

(continued)

| Kind of resin composition | | | | PA9T/PPE/GF | | | | |
|---|---|---|---|---|---|---|---|---|
| No. | | | | Example | | | | |
| | | | | 37 | 38 | 39 | 40 | 41 |
| Injection molding stability | | Fluctuation of injection pressure | MPa | ±4 | ±6 | ±4 | ±2 | ±2 |
| Physical properties | Tensile strength | | MPa | 105 | 98 | 118 | 128 | 121 |
| | Tensile breakage distortion | | % | 2 | 1.8 | 2.3 | 2.5 | 2.5 |
| | Flexural strength | | MPa | 148 | 156 | 166 | 178 | **172** |
| | Flexural modulus | | MPa | 8370 | 8060 | 8400 | 8950 | 8900 |
| | Charpy impact strength | 23°C | kJ/m$^2$ | 6.8 | 7.1 | 7.9 | 9.2 | 8.5 |
| | | -30°C | kJ/m$^2$ | 7 | 8.2 | 7.8 | 9 | 8.5 |
| | Deflection temperature under load | 0.45 MPa Load | °C | 295 | 292 | 295 | 294 | 292 |
| | | 1.8 MPa Load | °C | 250 | 249 | 250 | 251 | 250 |
| | UL-94 VB TEST 0.8 mmt | Ranking | | V-0 | V-0 | V-0 | V-0 | V-0 |
| | | Total burning time | sec. | 49 | 42 | 31 | 2.4 | 2.9 |
| | | Maximum burning time | Seconds | 8.2 | 9.1 | 4.1 | 3.4 | 4.1 |
| | Reflow resistance | Highest temperature without swelling | °C | 260 | 260 | 270 | 270 | 265 |
| | Corrosion test | Weight loss | Mass ppm | 290 | 300 | 120 | 100 | 54 |

Comparison of Examples 37 to 41 and Example 30 showed that these had an excellent effect when the kind of the compatibilizing agent and the amount thereof are changed, or denatured polyphenylene ether is used. It was also shown that these had an excellent effect irrespective of the kind of polyamides.

Comparison of Examples 40 and 41 and Examples 24 and 30 showed that use of polyphenylene ether at a specific viscosity improves the respective properties more significantly.

[Table 8]

| Kind of resin composition | | | | PPS/PPE | | | | | | |
|---|---|---|---|---|---|---|---|---|---|---|
| No. | | | | Example | | | | | Comparative Example | |
| | | | | 42 | 43 | 44 | 45 | 46 | 19 | 20 |
| Blending | Upstream feed opening | | | | | | | | | |
| | PPS-1 | | Parts by mass | 80 | | | | | | |
| | PPS-2 | | Parts by mass | | 80 | 80 | 80 | | 80 | 80 |
| | PPS-3 | | Parts by mass | | | | | 80 | | |
| | PPE-1 | | Parts by mass | 20 | 20 | 20 | 20 | 20 | 20 | 20 |
| | SEBS-3 | | Parts by mass | 5 | 5 | 5 | 5 | 5 | 5 | 5 |
| | SG-C | | Parts by mass | 2 | 2 | 2 | 2 | 2 | 2 | 2 |
| | Downstream second feed opening | | | | | | | | | |
| | GF | | Parts by mass | 30 | 30 | 30 | 30 | 30 | 30 | 30 |
| | FR-1 | | Parts by mass | 30 | 30 | 30 | 30 | 30 | 30 | 30 |
| | Talc | | Parts by mass | 30 | 30 | 30 | 30 | 30 | 30 | 30 |
| | CAOH-2 | | Parts by mass | 1.5 | 0.1 | 1.5 | 3 | 1.5 | | 3.5 |
| | Total | | Parts by mass | 198.5 | 197.1 | 198.5 | 200 | 198.5 | 197 | 200.5 |
| | Amount of basic compound based on flame retardant | | Parts by mass | 5.0 | 0.3 | 5.0 | 10.0 | 5.0 | 0.0 | 11.7 |
| Process | Extruder barrel temperature | Prior stage | °C | 310 | | | | | | |
| | | Subsequent stage | °C | 300 | | | | | | |
| | Molding temperature | Cylinder temperature | °C | 300 | | | | | | |
| | | Metal mold temperature | °C | 80 | | | | | | |
| Extrusion processability | | | | ○ | ○ | ○ | ○ | ○ | Δ | × |
| Injection molding stability | | Fluctuation of injection pressure | MPa | ±3 | ±2 | ±2 | ±2 | ±3 | +10 | -38 |
| Evaluation | UL-94 VB TEST 3.2 mmt | Ranking | | V-0 | V-0 | V-0 | V-0 | V-0 | V-0 | V-1 |
| | Corrosion test | Weight loss | Mass ppm | 38 | 45 | 45 | 45 | 52 | 640 | 40 |

Δ : Much resin dirt during extrusion
×: Strand breakage frequently occurs during extrusion.

In the case where PPS and PPE were used for the thermoplastic resin and made compatible by SEBS-1 and SG-C, it was shown that use of the flame retardant and the basic compound of the present embodiment improved flame retardance, suppression of corrosion, extrusion processability, and molding stability.

[Table 9]

| Kind of resin composition | | | | PPE and PPE/elastomer | | | | | |
|---|---|---|---|---|---|---|---|---|---|
| No. | | | | Example | | | Comparative Example | Example | |
| | | | | 47 | 48 | 49 | 21 | 50 | 51 |
| Blending | Upstream feed opening | | | | | | | | |
| | PPE-3 | | Parts by mass | | | | | 20 | 20 |
| | PPE-4 | | Parts by mass | 100 | 100 | 100 | 100 | | |
| | SEBS-3 | | Parts by mass | | | | | 80 | |
| | SOE | | Parts by mass | | | | | | 80 |
| | Downstream second feed opening | | | | | | | | |
| | FR-1 | | Parts by mass | 20 | 20 | 20 | 20 | 15 | 15 |
| | Talc | | Parts by mass | 30 | 30 | 30 | 30 | | |
| | CAOH-2 | | Parts by mass | 0.04 | 1 | 2 | | 0.6 | 0.6 |
| | Total | | Parts by mass | 150.04 | 151 | 152 | 150 | 115.6 | 115.6 |
| | Amount of basic compound retardant | based on flame | Parts by mass | 0.2 | 5 | 10 | 0 | 4 | 4 |
| Process | Extruder barrel temperature | Prior stage | °C | 320 | | | | 260 | |
| | | Subsequent stage | °C | 300 | | | | 220 | |
| | Molding temperature | Cylinder temperature | °C | 330 | | | | | |
| | | Metal mold temperature | °C | 120 | | | | | |
| Processability | State during extrusion | | | ○ | ○ | ○ | × | ○ | ○ |
| | Resin dirt when sheet is extruded | | | - | - | - | - | ○ | ○ |
| Evaluation | Glossiness of molded piece surface | Gloss value | Incident angle 20° | 87 | 91 | 81 | 44 | - | - |
| | UL-94 VB TEST 1.6 mmt | Ranking | | V-0 | V-0 | V-0 | V-1 | - | - |
| | UL-94 VTM TEST 0.4 mmt | Ranking | | - | - | - | - | VTM-0 | VTM-0 |
| | Corrosion test | Weight loss | Mass ppm | 42 | 36 | 34 | 51 | - | - |
| ×: There is foaming in the strand during extrusion. | | | | | | | | | |

Comparing Examples 47 to 49 with Comparative Example 21, the strand during extrusion was stabilized in Examples 47 to 49, and the results of the flame-retardant test, the surface gloss test, and the corrosion test were also superior to those of Comparative Example 21. In Comparative Example 21, foaming in the strand was recognized during extrusion.

The pellets obtained in Examples 47 and 48 and Comparative Examples 26 and 27 were each molded into a sheet, and evaluation on the die drool by molding a sheet and evaluation on Flame retardance were performed.

In Examples 50 and 51, extrusion processability was high, and no occurrence of die drool during sheet formation was recognized. The sheet has high flame retardance (UL-94 VTM).

This application is based on Japanese Patent Application (Japanese Patent Application No. 2008-052560) filed with Japan Patent Office on March 3, 2008, and the content thereof is incorporated herein by reference.

Industrial Applicability

The flame-retardant resin composition according the present invention has higher flame retardance, heat resistance, extrusion processability, and injection molding stability, and has remarkably reduced corrosiveness to a metal, high reflow resistance at a high temperature, and further high mechanical properties. Accordingly, the flame-retardant resin composition according the present invention can be particularly suitably used for electric and electronic components, components for automobiles, and the like. Of these, it can be particularly suitably used electric and electronic components provided for a surface mount technology (SMT).

## Claims

1. A flame-retardant resin composition, comprising:

   (A) a thermoplastic resin;
   (B) at least one phosphinate salt selected from phosphinate salts represented by the following general formula (I), diphosphinate salts represented by the following general formula (II), and condensates thereof; and
   (C) a basic compound,
   wherein the flame-retardant resin composition comprises from 0.01 to 10 parts by mass of the (C) component based on 100 parts by mass of the (B) component:

   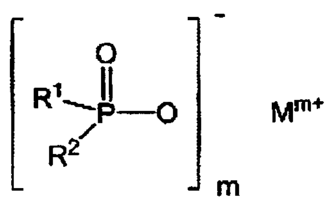 (I)

   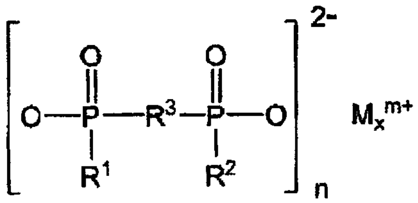 (II)

   wherein $R^1$ and $R^2$ may be the same or different from each other, and represent linear or branched $C_1$ to $C_6$-alkyl and/or aryl or phenyl; $R^3$ represents linear or branched $C_1$ to $C_{10}$-alkylene, $C_6$ to $C_{10}$-arylene, $C_6$ to $C_{10}$-alkylarylene or $C_6$ to $C_{10}$-arylalkylene; M represents one or more selected from calcium (ion), magnesium (ion), aluminum (ion), zinc (ion), bismuth (ion), manganese (ion), sodium (ion), potassium (ion), and a protonated nitrogen base; m is 2 or 3, n is an integer of from 1 to 3, and x is 1 or 2, and
   wherein (C) the basic compound is one or more selected from hydroxides and oxides of one or more selected from calcium, magnesium, and aluminum.

2. The flame-retardant resin composition according to claim 1, wherein (C) the basic compound has a number average particle size of from 100 nm to 25 $\mu$m.

**3.** The flame-retardant resin composition according to claim 1, wherein (C) the basic compound is calcium hydroxide and/or calcium oxide having a number average particle size of from 100 nm to 25 μm.

**4.** The flame-retardant resin composition according to claim 1, wherein (C) the basic compound is calcium hydroxide having a number average particle size of from 100 nm to 10 μm.

**5.** The flame-retardant resin composition according to claim 4, wherein the calcium hydroxide is calcium hydroxide having a number average particle size of from 100 nm to 5000 nm.

**6.** The flame-retardant resin composition according to claim 1, wherein the flame-retardant resin composition contains from 0.2 to 5 parts by mass of the (C) component based on 100 parts by mass of the (B) components.

**7.** The flame-retardant resin composition according to claim 1, wherein (A) the thermoplastic resin is one or more selected from polyphenylene ethers, styrene-based resins, olefin-based resins, polyesters (polybutylene terephthalate, polypropylene terephthalate, and liquid crystal polyesters), polyamides, polyarylene sulfides, polyarylates, polyethersulfones, polyetherimides, polysulfones, polyaryl ketones, and a mixture thereof.

**8.** The flame-retardant resin composition according to claim 7, wherein (A) the thermoplastic resin is polyamide having a melting point of 280°C or more.

**9.** The flame-retardant resin composition according to claim 7, wherein (A) the thermoplastic resin is polyamide having an aromatic ring in a repeating structural unit.

**10.** The flame-retardant resin composition according to claim 7, wherein the polyphenylene ether is a homopolymer made of 2,6-dimethylphenol, or a copolymer made of 2,6-dimethylphenol and 2,3,6-trimethylphenol.

**11.** The flame-retardant resin composition according to claim 7, wherein the polyphenylene ether is a copolymer made of 2,6-dimethylphenol and 2,3,6-trimethylphenol, and an amount of 2,3,6-trimethylphenol in the polyphenylene ether is from 10 to 30% by mass.

**12.** The flame-retardant resin composition according to claim 7, wherein the polyphenylene ether is polyphenylene ether whose reduced viscosity (0.5 g/dL chloroform solution, 30°C) is within a range of from 0.25 dL/g to 0.35 dL/g.

**13.** The flame-retardant resin composition according to claim 7, wherein the polyarylene sulfide is polyphenylene sulfide in which a concentration of chlorine contained is 1500 ppm or less.

**14.** The flame-retardant resin composition according to claim 7, wherein (A) the thermoplastic resin comprises polyphenylene ether and a thermoplastic resin other than polyphenylene ether.

**15.** The flame-retardant resin composition according to claim 14, wherein the thermoplastic resin other than polyphenylene ether is polyamide.

**16.** The flame-retardant resin composition according to claim 15, wherein a melting point of the polyamide is 280°C or more.

**17.** The flame-retardant resin composition according to claim 1, further comprising (D) an inorganic reinforcing material.

**18.** A heat-resistant connector comprising a flame-retardant resin composition according to any one of claims 1 to 17.

## Patentansprüche

**1.** Flammhemmende Harzzusammensetzung, umfassend:

(A) ein thermoplastisches Harz,
(B) mindestens ein Phosphinatsalz ausgewählt unter Phosphinatsalzen, die durch die folgende allgemeine Formel (I) dargestellt sind, Diphosphinatsalzen, die durch die folgende allgemeine Formel (II) dargestellt sind, und Kondensaten davon, und

(C) eine basische Verbindung,
wobei die flammhemmende Harzzusammensetzung 0,01 bis 10 Masseteile der (C)-Komponente, auf 100 Masseteile der (B)-Komponente bezogen, umfasst:

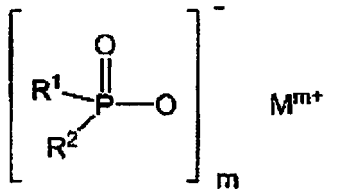

(I)

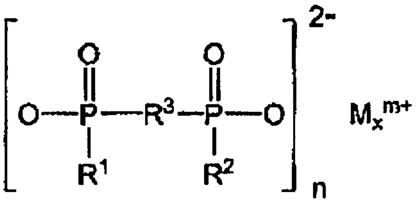

(II)

wobei $R^1$ und $R^2$ gleich oder verschieden voneinander sein können und lineares oder verzweigtes $C_1$- bis $C_6$-Alkyl und/oder Aryl oder Phenyl darstellen, $R^3$ lineares oder verzweigtes $C_1$- bis $C_{10}$-Alkylen, $C_6$- bis $C_{10}$-Arylen, $C_6$- bis $C_{10}$-Alkylarylen oder $C_6$- bis $C_{10}$-Arylalkylen darstellt, M eines oder mehrere ausgewählt unter Calcium(ion), Magnesium(ion), Aluminium(ion), Zink(ion), Wismut(ion), Mangan(ion), Natrium(ion), Kalium(ion) und einer protonierten Stickstoffbase darstellt, m 2 oder 3 beträgt, n eine ganze Zahl von 1 bis 3 ist und x 1 oder 2 beträgt und
wobei (C) die basische Verbindung eine oder mehrere ist ausgewählt unter Hydroxiden und Oxiden von einem oder mehreren ausgewählt unter Calcium, Magnesium und Aluminium.

**2.** Flammhemmende Harzzusammensetzung nach Anspruch 1, wobei (C) die basische Verbindung eine zahlendurchschnittliche Teilchengröße von 100 nm bis 25 μm) aufweist.

**3.** Flammhemmende Harzzusammensetzung nach Anspruch 1, wobei (C) die basische Verbindung Calciumhydroxid und/oder Calciumoxid ist, das eine zahlendurchschnittliche Teilchengröße von 100 nm bis 25 μm aufweist.

**4.** Flammhemmende Harzzusammensetzung nach Anspruch 1, wobei (C) die basische Verbindung Calciumhydroxid ist, das eine zahlendurchschnittliche Teilchengröße von 100 nm bis 10 μm aufweist.

**5.** Flammhemmende Harzzusammensetzung nach Anspruch 4, wobei das Calciumhydroxid Calciumhydroxid ist, das eine zahlendurchschnittliche Teilchengröße von 100 nm bis 5000 nm aufweist.

**6.** Flammhemmende Harzzusammensetzung nach Anspruch 1, wobei die flammhemmende Harzzusammensetzung 0,2 bis 5 Masseteile der (C)-Komponente, auf 100 Masseteile der (B)-Komponenten bezogen, enthält.

**7.** Flammhemmende Harzzusammensetzung nach Anspruch 1, wobei (A) das thermoplastische Harz eines oder mehrere ist ausgewählt unter Polyphenylenethern, Harzen auf der Basis von Styrol, Harzen auf der Basis von Olefin, Polyestern (Polybutylenterephthalat, Polypropylenterephthalat und Flüssigkristallpolyestern), Polyamiden, Polyarylensulfiden, Polyarylaten, Polyethersulfonen, Polyetherimiden, Polysulfonen, Polyarylketonen und einer Mischung davon.

**8.** Flammhemmende Harzzusammensetzung nach Anspruch 7, wobei (A) das thermoplastische Harz Polyamid ist, das einen Schmelzpunkt von 280 °C oder mehr aufweist.

**9.** Flammhemmende Harzzusammensetzung nach Anspruch 7, wobei (A) das thermoplastische Harz Polyamid ist, das einen aromatischen Ring in einer sich wiederholenden strukturellen Einheit aufweist.

**10.** Flammhemmende Harzzusammensetzung nach Anspruch 7, wobei der Polyphenylenether ein Homopolymer, das aus 2,6-Dimethylphenol hergestellt ist, oder ein Copolymer, das aus 2,6-Dimethylphenol und 2,3,6-Trimethylphenol

hergestellt ist, ist.

11. Flammhemmende Harzzusammensetzung nach Anspruch 7, wobei der Polyphenylenether ein Copolymer ist, das aus 2,6-dimethylphenol und 2,3,6-Trimethylphenol hergestellt ist und eine Menge von 2,3,6-Trimethylphenol in dem Polyphenylenether 10 bis 30 Masse-% beträgt.

12. Flammhemmende Harzzusammensetzung nach Anspruch 7, wobei der Polyphenylenether ist, dessen reduzierte Viskosität (0,5 g/dl Chloroformlösung, 30 °C) innerhalb eines Bereichs von 0,25 dl/g bis 0,35 dl/g liegt.

13. Flammhemmende Harzzusammensetzung nach Anspruch 7, wobei das Polyarylensulfid Polyphenylensulfid ist, wobei eine Konzentration von enthaltenem Chlor 1500 ppm oder weniger beträgt.

14. Flammhemmende Harzzusammensetzung nach Anspruch 7, wobei (A) das thermoplastische Harz Polyphenylenether und ein thermoplastisches Harz, bei dem es sich nicht um Polyphenylenether handelt, umfasst.

15. Flammhemmende Harzzusammensetzung nach Anspruch 14, wobei das thermoplastische Harz, bei dem es sich nicht um Polyphenylenether handelt, Polyamid ist.

16. Flammhemmende Harzzusammensetzung nach Anspruch 15, wobei ein Schmelzpunkt des Polyamids 280 °C oder mehr beträgt.

17. Flammhemmende Harzzusammensetzung nach Anspruch 1, ferner (D) ein anorganisches Verstärkungsmaterial umfassend.

18. Hitzefester Anschluss umfassend eine flammhemmende Harzzusammensetzung nach irgendeinem der Ansprüche 1 bis 17.

## Revendications

1. Composition de résine ignifugeante, comprenant :

(A) une résine thermoplastique ;
(B) au moins un sel de phosphinate choisi parmi les sels de phosphinate représentés par la formule générale (I) suivante, les sels de diphosphinate représentés par la formule générale (II) suivante, et leurs condensats ; et
(C) un composé basique,
dans laquelle la composition de résine ignifugeante comprend de 0,01 à 10 parties en poids de composant (C) pour 100 parties en poids de composant (B) :

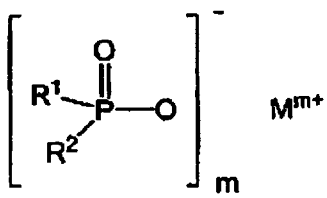

(I)

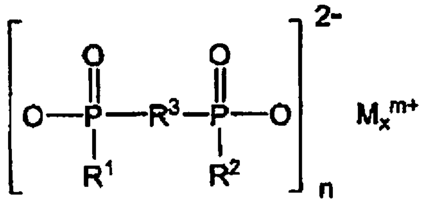

(II)

dans laquelle $R^1$ et $R^2$ peuvent être identiques ou différents l'un de l'autre, et représentent un alkyle $C_1$ à $C_6$ linéaire ou ramifié et/ou un aryle ou phényle ; $R^3$ représente un alkylène $C_1$ à $C_{10}$ linéaire ou ramifié, un arylène $C_6$ à $C_{10}$, un alkylarylène $C_6$ à $C_{10}$ ou un arylalkylène $C_6$ à $C_{10}$ ; M représente un ou plusieurs ions choisis

parmi (l'ion) calcium, (l'ion) magnésium, (l'ion) aluminium, (l'ion) zinc, (l'ion) bismuth, (l'ion) manganèse, (l'ion) sodium, (l'ion) potassium, et une base azotée protonée ; m est 2 ou 3, n est un nombre entier de 1 à 3, et x est 1 ou 2, et
dans laquelle (C) le composé basique est un ou plusieurs composés choisis parmi les hydroxydes et les oxydes d'un ou de plusieurs types choisis parmi calcium, magnésium, et aluminium.

**2.** Composition de résine ignifugeante selon la revendication 1, dans laquelle (C) le composé basique a une taille de particule moyenne en nombre de 100 nm à 25 μm.

**3.** Composition de résine ignifugeante selon la revendication 1, dans laquelle (C) le composé basique est un hydroxyde de calcium et/ou un oxyde de calcium ayant une taille de particule moyenne en nombre de 100 nm à 25 μm.

**4.** Composition de résine ignifugeante selon la revendication 1, dans laquelle (C) le composé basique est un hydroxyde de calcium ayant une taille de particule moyenne en nombre de 100 nm à 10 μm.

**5.** Composition de résine ignifugeante selon la revendication 4, dans laquelle l'hydroxyde de calcium est un hydroxyde de calcium ayant une taille de particule moyenne en nombre de 100 nm à 5000 nm.

**6.** Composition de résine ignifugeante selon la revendication 1, dans laquelle la composition de résine ignifugeante contient de 0,2 à 5 parties en poids de composant (C) pour 100 parties en poids des composants (B).

**7.** Composition de résine ignifugeante selon la revendication 1, dans laquelle (A) la résine thermoplastique est une ou plusieurs résines choisies parmi les éthers de polyphénylène, les résines styréniques, les résines oléfiniques, les polyesters (polybutylène téréphtalate, polypropylène téréphtalate, et polyesters à cristaux liquides), les polyamides, les polysulfures d'arylène, les polyarylates, les polyéthersulfones, les polyétherimides, les polysulfones, les polyarylcétones, et un mélange de celles-ci.

**8.** Composition de résine ignifugeante selon la revendication 7, dans laquelle (A) la résine thermoplastique est un polyamide ayant un point de fusion de 280 °C ou plus.

**9.** Composition de résine ignifugeante selon la revendication 7, dans laquelle (A) la résine thermoplastique est un polyamide ayant un cycle aromatique dans un motif structural répétitif.

**10.** Composition de résine ignifugeante selon la revendication 7, dans laquelle l'éther de polyphénylène est un homopolymère à base de 2,6-diméthylphénol, ou un copolymère à base de 2,6-diméthylphénol et 2,3,6-triméthylphénol.

**11.** Composition de résine ignifugeante selon la revendication 7, dans laquelle l'éther de polyphénylène est un copolymère à base de 2,6-diméthylphénol et 2,3,6-triméthylphénol, et une quantité de 2,3,6-triméthylphénol dans l'éther de polyphénylène est de 10 à 30 % en poids.

**12.** Composition de résine ignifugeante selon la revendication 7, dans laquelle l'éther de polyphénylène est un éther de polyphénylène dont la viscosité réduite (solution à 0,5 g/dL de chloroforme, 30 °C) est dans une plage de 0,25 dL/g à 0,35 dL/g.

**13.** Composition de résine ignifugeante selon la revendication 7, dans laquelle le polysulfure d'arylène est un polysulfure de phénylène ayant une concentration de chlore contenue de 1500 ppm ou moins.

**14.** Composition de résine ignifugeante selon la revendication 7, dans laquelle (A) la résine thermoplastique comprend un éther de polyphénylène et une résine thermoplastique autre que l'éther de polyphénylène.

**15.** Composition de résine ignifugeante selon la revendication 14, dans laquelle la résine thermoplastique autre que l'éther de polyphénylène est un polyamide.

**16.** Composition de résine ignifugeante selon la revendication 15, dans laquelle un point de fusion du polyamide est de 280 °C ou plus.

**17.** Composition de résine ignifugeante selon la revendication 1, comprenant en outre (D) un matériau de renfort inorganique.

**18.** Connecteur résistant à la chaleur comprenant une composition de résine ignifugeante selon l'une quelconque des revendications 1 à 17.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1950248 A
- WO 2004022640 A
- DE 2252258
- DE 2447727
- EP 0699708 A
- DE 19614424
- DE 19933901
- JP 2005537372 A
- US 3306874 A
- US 3306875 A
- US 3257357 A
- US 3257358 A
- JP 50051197 A
- JP 52017880 A
- JP 63152628 A
- WO 02094936 A
- JP 7228775 A
- US 2513188 A
- JP 4427671 B
- JP 453368 A
- US 5212240 A
- JP 61225217 A
- US 3274165 A
- JP 46027255 A
- BE 29437
- JP 5222196 A
- JP 8008869 A
- JP 9124926 A
- EP 699708 A
- JP 8073720 A
- JP 11181429 A
- JP 3073590 A
- JP 9071708 A
- JP 9183864 A
- JP 60034571 A
- JP 2006245982 B
- WO 2007058169 A
- JP 2008052560 A

### Non-patent literature cited in the description

- **JAMES E. MARK ; HARRY R. ALLCOCK ; ROBERT WEST.** Inorganic Polymers. Prentice-Hall International, Inc, 1992, 61-140
- **H. R. ALLCOCK.** Phosphorus-Nitrogen Compounds. Academic Press, Inc, 1972